(19) Europäisches Patentamt
European Patent Office
Office européen des brevets

(11) **EP 3 075 454 B1**

(12) **EUROPÄISCHE PATENTSCHRIFT**

(45) Veröffentlichungstag und Bekanntmachung des Hinweises auf die Patenterteilung:
**09.05.2018 Patentblatt 2018/19**

(51) Int Cl.:
***B04B 5/04*** *(2006.01)* ***B04B 9/10*** *(2006.01)*

(21) Anmeldenummer: **15162405.3**

(22) Anmeldetag: **02.04.2015**

(54) **LABORZENTRIFUGE UND VERFAHREN ZUM BETRIEB DERSELBEN**

LABORATORY CENTRIFUGE AND METHOD FOR OPERATING THE SAME

CENTRIFUGEUSE DE LABORATOIRE ET SON PROCÉDÉ DE FONCTIONNEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**05.10.2016 Patentblatt 2016/40**

(73) Patentinhaber: **Sigma Laborzentrifugen GmbH**
**37520 Osterode/Harz (DE)**

(72) Erfinder: **Sander, Michael**
**37520 Osterode (DE)**

(74) Vertreter: **REHBERG HÜPPE + PARTNER**
**Patentanwälte PartG mbB**
**Robert-Gernhardt-Platz 1**
**37073 Göttingen (DE)**

(56) Entgegenhaltungen:
**EP-A1- 2 835 178    US-A1- 2005 026 765**

**Beschreibung**

## TECHNISCHES GEBIET DER ERFINDUNG

Die Erfindung betrifft eine Laborzentrifuge sowie ein Verfahren zum Betrieb derselben. Derartige Laborzentrifugen finden Einsatz bspw. in der Biotechnologie, der pharmazeutischen Industrie, der Medizin und der Umweltanalytik. Mittels einer Laborzentrifuge erfolgt ein Zentrifugieren eines Produkts, insbesondere eines Behälters oder Gefäßes mit darin angeordneter Probe oder Substanz, mit Drehzahlen, welche mehr als 3.000 Umdrehungen/min, bspw. 15.000 Umdrehungen/min oder mehr betragen können, wobei hiermit bspw. auf das Produkt wirkende Beschleunigungen erzeugt werden, welche mehr als 15.000 x g, bspw. mehr als 16.000 x g, mehr als 20.000 x g bis hin zu mehr als 60.000 x g betragen können. Durch die Zentrifugation soll ein von der Probe oder der Substanz gebildetes Stoffgemisch in Komponenten unterschiedlicher Dichte zerlegt werden. Je nach den chemischen und/oder physikalischen Eigenschaften des Stoffgemisches kann während der Zentrifugation ergänzend eine gezielte Steuerung der Druck- und/oder Temperaturverhältnisse erfolgen. Um lediglich einige Beispiele zu nennen, kann der Einsatz einer Laborzentrifuge im Zusammenhang mit

- einer Polymerase-Kettenreaktion (PCR),
- einer Bestimmung des Hämatokrits,
- zytologischen Untersuchungen oder
- dem Zentrifugieren von Mikrotitern, Blutbeuteln, Erdölgefäßen oder Blutgefäßen u. ä erfolgen.

## STAND DER TECHNIK

Grundsätzlich finden in Laborzentrifugen Rotoren Einsatz, welche als Winkelrotoren oder Ausschwingrotoren ausgebildet sind und um eine vertikale Rotationsachse rotieren.

US 2,821,339 A offenbart eine Laborzentrifuge, bei welcher ein Rotor mit geringer Drehzahl um eine horizontal orientierte Rotationsachse verdreht werden soll. Hierbei wird der Rotor unmittelbar von einem Antriebszapfen eines elektrischen Antriebs getragen. Der Rotor ist als Trommel mit hohlzylindrischer Trommelwandung ausgebildet. Die Trommel ist auf der dem Antrieb zugewandten Seite durch eine kreisscheibenförmige Tragplatte geschlossen, während diese auf dem Antrieb abgewandten Seite offen ist. An der Trommelwandung sind innenliegend mehrere in Umfangsrichtung verteilte Halterungen für Behälter mit zu zentrifugierenden Proben gehalten. Hierbei sind die Halterungen als Federclips ausgebildet, welche mit zwei radial nach innen orientierten, sich V-förmig nach innen öffnenden Federarmen ausgebildet sind. Von der offenen Seite der Trommel können die Behälter parallel zur Rotationsachse des Rotors zwischen Federarme entweder einer Halterung oder benachbarte Federarme zweier benachbarter Halterungen eingeführt werden, womit die Behälter von den Federarmen eingespannt werden. Hierbei ist die Längsachse der Behälter parallel zur Rotationsachse des Rotors orientiert, wobei ein Deckel oder Verschluss des Behälters auf der dem Antrieb abgewandten Seite angeordnet ist. Möglich ist, dass mehrere Trommelwandungen unterschiedlicher Durchmesser konzentrisch ineinander geschachtelt werden können, womit die Zahl der mit dem Rotor zu zentrifugierbaren Behälter erhöht werden kann.

Die Druckschrift US 2008/0182742 A1 offenbart eine Zentrifuge, bei welcher mehrere Rotoren, die kreisscheibenförmig ausgebildet sind, um eine gemeinsame horizontale Rotationsachse rotieren. Über einen gemeinsamen Antrieb oder mehrere individuelle Antriebe können die Rotoren gemeinsam angetrieben werden, wobei aber auch während des weiteren Zentrifugierens mit den anderen Rotoren ein Rotor von dem mindestens einen Antrieb entkoppelt werden kann, zentrifugierte Proben von diesem Rotor entnommen werden können und der Rotor mit neuen Proben bestückt werden kann mit anschließendem Wiederantrieb des Rotors durch den zugeordneten Antrieb. Auf diese Weise muss ein Zentrifugieren mit einzelnen oder mehreren Rotoren nicht unterbrochen werden, wenn ein anderer Rotor be- oder entladen werden soll. Um einen Rotor von der Antriebsverbindung, bspw. eine Antriebstrommel, zu lösen, ist möglich, dass der Rotor quer zur Rotationsachse verlagert wird. Ein Be- und Entladen eines Rotors erfolgt über eine Be- und Entladeeinrichtung, welche über eine Schiene parallel zur Rotationsachse bewegbar ist, so dass die Be- und Entladeeinrichtung jeweils mit den unterschiedlichen Rotoren in Wechselwirkung treten kann. Die Be- und Entladeeinrichtung verfügt des Weiteren über einen Aktuator, mittels dessen eine neue Probe von außen in Richtung der Rotationsachse einer Halterung des Rotors zugeführt werden kann und umgekehrt von einer Halterung eine fertig zentrifugierte Probe in radialer Richtung von der Rotationsachse des Rotors entfernt werden kann.

DE 10 2012 201 717 A1 offenbart eine Zentrifuge, bei welcher mehrere Module jeweils einen Rotor besitzen. Der Rotor besitzt eine horizontale Rotationsachse und bildet eine wannenartige Aufnahme aus, deren Längsachse parallel zur Rotationsachse orientiert ist und welche einen U-förmigen Querschnitt mit geringfügig divergierenden Seitenschenkeln des U besitzt, wobei die Rotationsachse vertikal zur Erstreckungsebene des U ungefähr mittig durch das U verläuft. In der Aufnahme können mehrere Probenbehälter in Richtung der Rotationsachse hintereinander angeordnet und gehalten werden, wobei Probenkanal-Längsachsen mehrerer Probenbehälter parallel zueinander in einer gemeinsamen Ebene angeordnet sind, die radial zur Rotationsachse orientiert ist. Die Module besitzen einen Drehstellungssensor zur Erfassung der Drehstellung der Aufnahme. Unter Nutzung des Signals des Drehstellungssensors wird zum Laden von Proben in die Aufnahme sowie Entnehmen von Proben aus der Aufnahme nach dem Zentrifugieren die Aufnahme in eine Be- und Entladestellung gebracht, in welcher die Probenkanal-Längsachsen parallel zur Erdbeschleunigung orientiert sind. Ein Zentrifugieren erfolgt hier mit Drehzahlen von mehr als 3.000 Umdrehungen pro Minute, wodurch ein Wechselanteil der auf die Proben wirkende Beschleunigung infolge der Erdbeschleunigung eine Störgröße mit einem Einfluss von weniger als einem Prozent betragen soll. Über eine Ausgleichseinrichtung mit einer Ausgleichsmasse kann eine etwaige Unwucht des Rotors beseitigt werden. Vorzugsweise handelt es sich bei den zu zentrifugierenden Probenträgern um sogenannte "Gel Carts", welche mehrere Probenkanäle aufweisen. Der Probenträger soll über ein Rastmittel an der Aufnahme gehalten werden. Zur Herbeiführung eines kleinen Bauraums des Rotors können die Probenträger mit einem so kleinen Abstand von der Rotationsachse angeordnet sein, dass ein Ende eines Probenkanals auf der Rotationsachse liegt. Ein Be- und/Entladen kann durch Greifwerkzeuge eines Ladeautomaten oder mittels einer Pipettiereinrichtung erfolgen. Hierbei erfolgt das Be- und Entladen in der Be- und Entladestellung der Aufnahme mit einem Einbringen der Probe oder des Probenträgers von oben zwischen die Seitenschenkel der U-förmigen Aufnahme und Entnehmen der Probe oder des Probenträgers nach der Zentrifugation ebenfalls nach oben.

EP 2 835 178 A1 offenbart eine Zentrifuge, welche zum Waschen von Mikrotiter-Platten verwendet wird. In der Zentrifuge werden die Mikrotiter-Platten um eine horizontale Rotationsachse verdreht. Um die Mikrotiter zu entleeren oder waschen sind die Öffnungen der Mikrotiter-Platten radial nach außen orientiert, so dass die auf ein Fluid in den Mikrotiter-Platten wirkende Zentrifugalkraft das Fluid aus den Mikrotiter-Platten drängt. Ein Antrieb der Zentrifuge erfolgt mit einer Antriebsdrehzahl von 5 - 3000 Umdrehungen pro Minute. Für ein anderes Ausführungsbeispiel wird die Zentrifuge eingesetzt für ein Zentrifugieren von Reaktionsgefäßen oder von Blut für Blutbanken. In diesem Fall sind die Öffnungen der Reaktionsgefäße radial nach innen orientiert. Ausgehend von einer Ruhe-Winkelstellung erfolgt die Beschleunigung der Reaktionsgefäße über einen Winkelbereich von 180° derart, dass in der damit erreichten Umkehr-Winkelstellung zumindest eine Zentrifugalbeschleunigung von 1 g erreicht ist, womit vermieden werden soll, dass die Substanz aus den Reaktionsgefäßen nach unten tropft. Als problematisch wird das Beschleunigen von Mikrotiter-Platten mit kleinen Ausnehmungen für die in den Reaktionsgefäßen angeordneten Substanzen beschrieben, da es zu einem unerwünschten Schwappen der Substanz von einem Reaktionsgefäß zu einem benachbarten Reaktionsgefäß infolge der Beschleunigung kommen kann. Zur Abhilfe wird vorgeschlagen, dass eine Beschleunigung von 500 Umdrehungen pro min./sec. bis 1200 Umdrehungen pro min./sec. eingesetzt wird.

Weiterer Stand der Technik ist aus US 2005/0026765 A1 bekannt.

## AUFGABE DER ERFINDUNG

Der vorliegenden Erfindung liegt die Aufgabe zugrunde,

- ein Verfahren zum Betrieb einer Laborzentrifuge, bei welcher der Rotor um eine horizontale Rotationsachse rotiert, sowie
- eine Laborzentrifuge

insbesondere hinsichtlich des mit der Zentrifugation zu erzielenden Ergebnisses und/oder des Einsatzspektrums der mit der Laborzentrifuge zu zentrifugierenden Produkte zu verbessern.

## LÖSUNG

Die Aufgabe der Erfindung wird erfindungsgemäß mit den Merkmalen der unabhängigen Patentansprüche gelöst. Weitere bevorzugte erfindungsgemäße Ausgestaltungen sind den abhängigen Patentansprüchen zu entnehmen.

## BESCHREIBUNG DER ERFINDUNG

Die Erfindung betrifft ein Verfahren zum Betrieb einer Laborzentrifuge zum Zentrifugieren eines Produkts. Vorzugsweise handelt es sich bei dem Produkt um einen Behälter oder ein Gefäß, welcher/welches eine Probe oder eine Substanz enthält. Der Behälter oder das Gefäß kann dabei eine obere Öffnung besitzen, über welche die Probe oder Substanz eingebracht und/oder entnommen werden kann. Hierbei kann die obere Öffnung des Gefäßes oder Behälters während des Zentrifugierens offen sein oder (bspw. mit einem Stopfen oder Deckel) verschlossen sein.

Die im Rahmen der Erfindung eingesetzte Laborzentrifuge verfügt über einen Rotor beliebiger Bauart, welcher um eine horizontale Rotationsachse rotiert und an dem das Produkt gehalten ist, was zwecks Erzeugung der Zentrifugalkraft beabstandet von der Rotationsachse erfolgt. Das Halten des Produkts an dem Rotor kann hierbei beliebig erfolgen, wobei das Halten an dem Rotor starr oder beweglich, grundsätzlich entsprechend einem Ausschwingrotor oder vergleichbar einer "Gondel eines Riesenrads" erfolgen kann. Um lediglich ein weiteres nicht beschränkendes Beispiel zu nennen, kann das Halten des Produkts an dem Rotor derart erfolgen, dass eine Längsachse des Produkts radial zur Rotationsachse orientiert ist, wobei dann die Öffnung des Behälters oder Gefäßes der Rotationsachse zugewandt sein kann.

Gemäß dem Stand der Technik wird in Kauf genommen, dass mit dem Anlaufen und Abbremsen der Laborzentrifuge das Produkt temporär vertikalen Beschleunigungen oder Beschleunigungskomponenten ausgesetzt ist, deren Richtungssinn sich je nach Winkelstellung des Produkts an dem Rotor hinsichtlich der Rotationsachse ändert. Ist bspw. ein Behälter des Produkts mit seiner Längsachse radial zur Rotationsachse orientiert mit zu der Rotationsachse weisender Öffnung des Behälters (im Folgenden auch "beispielhafte Anordnung"), so wirkt für vernachlässigbar kleine Zentrifugalkräfte am Anfang des Anlaufvorgangs sowie am Ende des Abbremsvorgangs in einer 6:00-Uhr-Stellung des Produkts die Erdbeschleunigung in Richtung des Bodens des Behälters, also von der oberen Öffnung des Behälters weg, während in der 12:00-Uhr-Stellung die Erdbeschleunigung in entgegengesetzte Richtung, also von dem Boden des Behälters weg und in Richtung der Öffnung des Behälters wirkt. Solange der Rotor mit einer Winkelgeschwindigkeit rotiert, welche eine unzureichende Zentrifugalbeschleunigung erzeugt, führt zwar diese Zentrifugalbeschleunigung dazu, dass in der 12:00-Uhr-Stellung die auf die Probe oder Substanz wirkende resultierende Beschleunigung, die sich aus der Überlagerung der Zentrifugalbeschleunigung und der Erdbeschleunigung ergibt, reduziert ist. Dennoch ändert sich für den Umlauf des Produkts um die Rotationsachse der Richtungssinn der in vertikaler Richtung auf die Probe wirkenden resultierenden Beschleunigung. Diese führt sowohl während des Anlaufens der Laborzentrifuge als auch während des Abbremsens der Laborzentrifuge unter Umständen zu einer unerwünschten Durchmischung der Probe, welche letztendlich das Ergebnis des Zentrifugierens unerwünscht beeinträchtigt. Zum anderen birgt die Umkehrung der resultierenden Beschleunigung in der oberen Halbebene das Risiko in sich, dass die Probe aus der oberen Öffnung des Behälters austritt. Somit ist unter Umständen der Einsatz der Laborzentrifuge eingeschränkt auf Produkte mit einem Behälter oder Gefäß, bei welchem die obere Öffnung verschlossen ist. Für offene Behälter oder Gefäße ist der Einsatz der Laborzentrifuge eingeschränkt auf Produkte, bei welchen eine Fließfähigkeit der Probe oder Substanz und/oder eine Kapillarwirkung derart vorgegeben sind, dass ein "Herauslaufen" der Probe oder Substanz zumindest während des Zeitraums, in welchem sich die Probe in dem Winkelbereich der oberen Halbebene befindet, nicht möglich ist.

Für das erfindungsgemäße Verfahren finden zur Vermeidung dieser Nachteile und/oder Einschränkungen zwei Maßnahmen alternativ oder kumulativ Einsatz:

a) Eine Ausgestaltung der Erfindung betrifft das Anlaufen der Laborzentrifuge. Erfindungsgemäß befindet sich Produkt an dem Rotor zunächst in einer Ruhe-Winkelstellung (oder wird in diese verbracht). In der Ruhe-Winkelstellung besitzt der Rotor mit dem Produkt eine Winkelgeschwindigkeit von Null. In dieser Ruhe-Winkelstellung ist das Produkt zwischen einer 3:00-Uhr-Stellung und einer 9:00-Uhr-Stellung (also in der unteren Hälfte eines imaginären Uhren-Zifferblatts) angeordnet. In der Ruhe-Winkelstellung wirkt somit in jedem Fall die Erdbeschleunigung zumindest mit einer Komponente von der Rotationsachse radial nach außen. In der "beispielhaften Anordnung" wirkt in der Ruhe-Winkelstellung zumindest eine Komponente der Erdbeschleunigung auf die Probe in Richtung des Bodens des Behälters. Ausgehend von dieser Ruhe-Winkelstellung wird dann der Rotor beschleunigt, bis das Produkt erstmalig in einer 12:00-Uhr-Stellung angeordnet ist, in welcher sich der Richtungssinn der Wirkung der Gravitation gegenüber einer 6:00-Uhr-Stellung umgekehrt hat und welche somit als Umkehr-Winkelstellung bezeichnet wird.
Um zu vermeiden, dass sich in der Umkehr-Winkelstellung der Richtungssinn der resultierenden Beschleunigung, die sich aus der Überlagerung der Erdbeschleunigung und der Zentrifugalbeschleunigung ergibt, umkehrt, wird der Rotor erfindungsgemäß gezielt derart beschleunigt, dass dieser mit dem Erreichen der Umkehr-Winkelstellung bereits eine Winkelgeschwindigkeit erreicht hat, welche so groß ist, dass die auf das Produkt wirkende Zentrifugalbeschleunigung größer ist als die Erdbeschleunigung. Auf diese Weise wirkt in der Umkehr-Winkelstellung eine resultierende Beschleunigung, welche geringfügig größer ist als Null und radial nach außen orientiert ist, was für die "beispielhafte Anordnung" bedeutet, dass auch in der Umkehr-Winkelstellung die Probe in dem Behälter zumindest geringfügig in Richtung des Bodens beschleunigt wird. Eine auf das Produkt während des Anlaufens der Laborzentrifuge wirkende resultierende Beschleunigung hat damit erfindungsgemäß keine vertikale Komponente, welche ihren Richtungssinn verändert.
b) Ebenfalls möglich ist, dass der Abbremsvorgang in die Ruhe-Winkelstellung dann aus der Umkehr-Winkelstellung eingeleitet wird, wenn die Winkelgeschwindigkeit in der Umkehr-Winkelstellung innerhalb eines vorgegebenen Winkelgeschwindigkeitsbereichs liegt (solange gewährleistet ist, dass diese in der Umkehr-Winkelstellung so groß ist, dass die auf das Produkt wirkende Zentrifugalbeschleunigung größer ist als die Erdbeschleunigung). Ebenfalls möglich ist, dass zuvor gezielt eine spezifische vorgegebene Winkelgeschwindigkeit herbeigeführt wird und dann ausgehend von dieser vorgegebenen spezifischen Winkelgeschwindigkeit mit Erreichen der Umkehr-Winkelstellung des Produkts der erläuterte Abbremsvorgang bis in die Ruhe-Winkelstellung herbeigeführt wird.

Im Rahmen der Erfindung erfolgt die Beschleunigung während des Anlaufvorgangs und/oder das Abbremsen von einer Winkelgeschwindigkeit, in welcher die Zentrifugalbeschleunigung größer ist als die Erdbeschleunigung, auf eine Winkelgeschwindigkeit von Null (bzw. umgekehrt) über einen Winkelbereich, welcher kleiner als 270° ist.
Für die Erzeugung der erforderlichen Beschleunigung oder Abbremsung gibt es vielfältige Möglichkeiten. Um ein nicht beschränkendes Beispiel zu nennen, können der Antrieb und die Steuerung desselben so ausgebildet sein, dass die erforderlichen beschleunigenden oder abbremsenden Momente in dem angegebenen Winkelbereich erzeugt werden können. Gemäß einem weiteren nicht beschränkenden Beispiel kann die Beschleunigung oder Abbremsung durch die gezielte Ankopplung oder Abkopplung einer trägen Masse herbeigeführt oder unterstützt werden. So kann für den Beschleunigungsvorgang zunächst (u. U. auch in einem länger andauernden Beschleunigungsvorgang) eine träge Masse mit einer kinetischen Rotationsenergie versehen werden, welche mindestens so groß ist wie die kinetische Energie, wenn der Rotor und die träge Masse gemeinsam mit einer Winkelgeschwindigkeit rotieren, für die die Zentrifugalbeschleunigung größer ist als die Erdbeschleunigung, während sich zunächst während dieser Beschleunigung der trägen Masse der Rotor mit dem Produkt in der Ruhe-Winkelstellung befindet. Mit dem Erreichen der erforderlichen kinetischen Energie erfolgt dann die Kupplung der trägen Masse mit dem Rotor, womit die träge Masse den Rotor "mitnimmt". Hierbei kann eine Kupplung plötzlich oder sukzessive geschlossen werden, eine gesteuert schließende Kupplung eingesetzt werden oder eine Rutschkupplung eingesetzt werden. Die vollständige Kopplung der Drehbewegung der trägen Masse mit der Drehbewegung des Rotors erfolgt bis zum Erreichen der Umkehr-Winkelstellung, womit dann das Produkt mit dem Rotor die erforderliche Winkelgeschwindigkeit erreicht hat.

Mit der Vorgabe, dass der Rotor in der Umkehr-Winkelstellung eine Winkelgeschwindigkeit besitzen soll, welche so groß ist, dass die auf das Produkt wirkende Zentrifugalbeschleunigung größer ist als die Erdbeschleunigung, ist lediglich eine Untergrenze angegeben. Vorzugsweise ist die Winkelgeschwindigkeit in der Umkehr-Winkelstellung so groß, dass die auf das Produkt wirkende Zentrifugalbeschleunigung zumindest dem Zweifachen der Erdbeschleunigung entspricht.

Grundsätzlich möglich ist, dass die Ruhe-Winkelstellung des Produkts einer 6:00-Uhr-Winkelstellung entspricht, so dass die Herbeiführung der Winkelgeschwindigkeit in der Umkehr-Winkelstellung in einem Winkelbereich von 180° erforderlich ist. Erfindungsgemäß weicht aber die Ruhe-Winkelstellung von einer 6:00-Uhr-Winkelstellung ab (wobei aber weiterhin gilt, dass das Produkt in der Ruhe-Winkelstellung zwischen einer 3:00-Uhr-Stellung einer 9:00-Uhr-Stellung angeordnet ist). Liegt bspw. in einer Extremüberlegung die Ruhe-Winkelstellung in einer 3:00-Uhr-Stellung (womit ein nicht fließfähiges Medium, welches die Probe bildet, gerade noch nicht in Richtung der Rotationsachse beschleunigt wird), durchläuft die Probe auf dem Weg zur Umkehr-Winkelstellung einen Winkelbereich von 270°, wobei nach Beschleunigung über einen Winkel von 90° und mit dem Erreichen der 6:00-Uhr-Stellung das Produkt bereits auf eine von Null verschiedene Winkelgeschwindigkeit beschleunigt worden ist. Insgesamt kann durch diese Maßnahme der Winkelbereich, über welchen die Beschleunigung des Rotors und des Produkts erfolgen muss, um die erforderliche Winkelgeschwindigkeit in der Umkehr-Winkelstellung zu erreichen, vergrößert werden. Mit dieser Vergrößerung des Winkelbereichs kann einerseits eine Reduzierung der erforderlichen Beschleunigungs- und Abbremskräfte herbeigeführt werden, womit die Anforderungen an den Antrieb und die Steuerung desselben reduziert werden können. Andererseits führt die unter Umständen starke Beschleunigung oder Abbremsung zwischen der Ruhe-Winkelstellung und der Umkehr-Winkelstellung zu einer auf das Produkt wirkenden unerwünschten Tangentialbeschleunigung, welche durch Vergrößerung des Winkelbereichs, über welchen die Abbremsung oder Beschleunigung erfolgen muss, reduziert werden kann.

Erfindungsgemäß erfolgt das Be- und Entladen des Produkts zu und von dem Rotor in einer Be- und Entladestellung, welche der 6:00-Uhr-Stellung entspricht. Hieran anschließend wird dann zunächst mittels des Antriebs der Rotor mit einem ersten Drehrichtungssinn in die Ruhe-Winkelstellung überführt, von welcher dann die Beschleunigung mit einem entgegengesetzten zweiten Drehrichtungssinn in Richtung der Umkehr-Winkelstellung erfolgt. Das Entsprechende gilt auch für den Abbremsvorgang, für welchen bis zur Ruhe-Winkelstellung während des Abbremsens eine Verdrehung des Rotors mit einem ersten Drehrichtungssinn erfolgt mit anschließendem Zurückdrehen mit einem entgegengesetzten zweiten Drehrichtungssinn von der Ruhe-Winkelstellung in die Entladestellung. Anders gesagt kann mit der erfindungsgemäßen Maßnahme bei dem Beschleunigen oder Abbremsen "Anlauf" genommen werden bzw. beim Abbremsen eine Art "Überschwingen" der Probe über die 6:00-Uhr-Winkelstellung erfolgen.

Möglich ist, dass das Produkt manuell dem Rotor zugeführt wird, mit dem Rotor gekoppelt wird, von dem Rotor entkoppelt wird und/oder von dem Rotor entfernt wird. In bevorzugter Ausgestaltung der Erfindung wird allerdings das Produkt automatisch dem Rotor zugeführt und/oder automatisch von dem Rotor entfernt, wobei durchaus auch möglich ist, dass zusätzlich eine automatische Kopplung und/oder Entkopplung des Produkts mit und von dem Rotor erfolgt. Es hat sich gezeigt, dass die derartige Automatisierung der Handhabung des Produkts besonders gut möglich ist bei einer hier einschlägigen Laborzentrifuge mit einem Rotor, der um eine horizontale Rotationsachse rotiert, was insbesondere dadurch begründet ist, dass eine automatisierte Handhabung des Produkts in einer horizontalen Handhabungsebene besonders einfach ist und die automatisierte Annäherung der Probe an den Rotor und die Entfernung von diesem für einen Rotor mit horizontaler Rotationsachse gewährleistet werden kann.

Durchaus möglich ist, dass die (automatische oder manuelle) Zuführung des Produkts zu dem Rotor und das Entfernen des Produkts von dem Rotor nach dem Zentrifugieren mit unterschiedlichem Richtungssinn, also die Zuführung mit einer Hinbewegung sowie das Entfernen mit einer Rückbewegung, erfolgt. Erfindungsgemäß wird für eine bevorzugte Weiterbildung allerdings vorgeschlagen, dass das automatische Zuführen des Produkts zu dem Rotor und das Entfernen des Produkts von dem Rotor nach dem Zentrifugieren mit demselben Richtungssinn erfolgt. Auf diese Weise ist ermöglicht, dass die Handhabung der Produkte vor dem Zentrifugieren und die Zuführung der Produkte auf einer Seite des Rotors erfolgt, während die Entfernung und weitere Handhabung der zentrifugierten Produkte auf der anderen Seite des Rotors erfolgt. Für die Rotation des Rotors um eine horizontale Achse bedeutet dies, dass die Rotationsebene des Rotors einen Halbraum, in welchem das Vorbereiten und Zuführen der Produkte erfolgt, trennt von einem Halbraum, in welchem das Entfernen des Produkts (u. U. mit weiterer Verarbeitung) erfolgen kann. Vorzugsweise erfolgt hierbei die Bewegung des Produkts beim Zuführen und Entfernen parallel zu der Rotationsachse des Rotors, wobei das Produkt für das Zuführen in eine Durchgangsausnehmung des Rotors eingebracht wird und für das Entfernen auf der anderen Seite aus der Durchgangsausnehmung des Rotors entnommen werden kann. Möglich ist bspw., dass die Ausnehmung als im Querschnitt randgeschlossene Ausnehmung eines insbesondere scheibenartigen Rotors ausgebildet ist. Durchaus möglich ist aber auch, dass die Ausnehmung randseitig an dem bspw. scheibenartigen Rotor gebildet ist, womit die Ausnehmung auch im Querschnitt randoffen ausgebildet sein kann.

In weiterer Ausgestaltung des erfindungsgemäßen Verfahrens wird über eine Ausgleichseinrichtung eine von der Masse des Produkts abhängige Unwucht des Rotors reduziert. Die Ausgleichseinrichtung kann dabei automatisch oder manuell betrieben werden. Beispielsweise kann die Ausgleichseinrichtung mit einer Zusatzmasse gebildet sein, welche diametral gegenüberliegend zu dem Produkt an dem Rotor gehalten ist und deren Abstand je nach Masse des Produkts verändert werden kann. Hierbei kann eine Verstellung des Abstands einer Ausgleichsmasse von der Rotationsachse stufenlos oder in Stufen erfolgen mittels eines Aktuators oder einer manuellen Verstelleinrichtung. Möglich ist auch, dass eine Ausgleichsmasse mit einer Skala zusammenwirkt, so dass bei einem bekannten Typ eines Produkts gezielt eine durch die Skala vorgegebene Stellung der Ausgleichsmasse herbeigeführt werden kann.

In weiterer Ausgestaltung der Erfindung ist das Produkt über eine Halterung an dem Rotor fixiert. Durchaus möglich ist hierbei, dass das Produkt unmittelbar an der Halterung des Rotors fixiert ist. Ein Fixieren kann auf beliebige Weise erfolgen, insbesondere mit einem Einklemmen des Produkts oder einem Halten des Produkts über eine Halte-, Rast- oder Verriegelungseinrichtung. Möglich ist auch, dass die Fixierung fliehkraftbetätigt durch die Rotation des Rotors betätigt wird. Im Extremfall ist sogar möglich, dass die Halterung ausschließlich über eine Aufnahme für das Produkt verfügt, in welche das Produkt radial nach außen eingelegt wird und an deren Absatz oder Boden sich das Produkt radial nach außen abstützt. In diesem Fall ist in der Ruhestellung sowie während des Anlaufens des Rotors das Produkt durch die Gravitationskraft und die sich aufbauende Zentrifugalkraft gegen den Boden oder Absatz der Aufnahme gepresst. Mit zunehmender Winkelgeschwindigkeit des Rotors wird die Anpressung des Produkts an den Boden oder den Absatz der Aufnahme gestärkt. Es versteht sich, dass zusätzlich zwischen Aufnahme und Produkt ein sichernde Reibkraft, eine Rast- oder Verriegelungseinrichtung oder eine beliebige andere Sicherungseinrichtung wirken kann.

In weiterer Ausgestaltung der Erfindung ist die Halterung mit einem Aufnahmekörper gebildet. Der Aufnahmekörper bildet einerseits eine Aufnahme aus, in welcher das Produkt angeordnet wird und/oder an welcher das Produkt gehalten werden kann. Andererseits bildet der Aufnahmekörper einen Kopplungsbereich aus. Über den Kopplungsbereich kann der Aufnahmekörper mit dem in der Aufnahme angeordneten Produkt an dem Rotor befestigt werden. So kann eine gezielte Gestaltung einerseits der Aufnahme für die Wechselwirkung mit dem Produkt und andererseits des Kopplungsbereichs für die Wechselwirkung mit dem Rotor erfolgen. Möglich ist hierbei, dass das Produkt der Aufnahme des Aufnahmekörpers zugeführt wird, wenn der Aufnahmekörper bereits an dem Rotor befestigt ist. Vorzugsweise erfolgt aber das Einbringen des Produkts in die Aufnahme des Aufnahmekörpers, bevor das Produkt dann mit dem Aufnahmekörper dem Rotor zugeführt wird und die Kopplung des Aufnahmekörpers im Kopplungsbereich mit dem Rotor erfolgt. Der Einsatz eines Aufnahmekörpers kann bspw. auch dann von Vorteil sein, wenn gewünscht ist, dass unterschiedliche Produkte mit unterschiedlichen Geometrien mit demselben Rotor zentrifugiert werden. In diesem Fall können Aufnahmekörper verwendet werden, welche dieselben Kopplungsbereiche besitzen, aber unterschiedliche Aufnahmen für die unterschiedlichen Produkte mit unterschiedlichen Geometrien besitzen. Denkbar ist auch, dass die Aufnahme mittels eines Adapters gebildet ist, welcher die Aufnahme spezifisch an die jeweilige Geometrie des Produkts anpasst. Möglich ist auch, dass der Aufnahmekörper über eine fliehkräftbetätigte Rast- oder Verriegelungseinrichtung an dem Rotor fixiert wird.

In weiterer Ausgestaltung der Erfindung wird über einen Sensor ein Drehwinkel des Rotors erfasst. Die Antriebseinheit des Rotors wird dann auf Grundlage des erfassten Drehwinkels gesteuert oder geregelt. Beispielsweise kann anhand des erfassten Drehwinkels gezielt eine Ent- und/oder Beladestellung des Rotors und/oder eine Ruhe-Winkelstellung des Rotors herbeigeführt werden. Des Weiteren kann auf Grundlage des von dem Sensor erfassten Drehwinkels die Applikation des beschleunigenden und/oder abbremsenden Moments durch die Antriebseinheit gesteuert oder geregelt werden, so dass mit dem Erreichen der Umkehr-Winkelstellung die erforderliche Winkelgeschwindigkeit erreicht ist.

In weiterer Ausgestaltung der Erfindung findet eine drehwinkelbasiert gesteuert oder geregelte Antriebseinheit Einsatz, wobei vorzugsweise eine mit einem rotierenden Feld ausgebildete Antriebseinheit eingesetzt ist. Im Vergleich zu herkömmlichen Regelungen von Elektromotoren erlauben Antriebseinheiten mit einer feldorientierten Steuerung (auch abgekürzt als "FOC") eine präzise Steuerung oder Regelung auf Grundlage des Drehmoments und der Geschwindigkeit. Für die Regelung von Drehfeldmaschinen werden die Maschinengrößen in fluss- und drehmomentbildende Komponenten zerlegt, so dass eine technische Entkopplung der Maschinenzustände erreichbar wird, wie sie physikalisch von der Gleichstrommaschine bekannt sind. Neben der durch eine feldorientierte Regelung erreichbaren hohen elektrischen Effizienz sind insbesondere zwei Eigenschaften der feldorientierten Regelung für die Erfindung von Bedeutung: Zum einen ermöglicht die feldorientierte Regelung eine Maximierung des verfügbaren Drehmoments, was für die hier benötigten hohen Beschleunigungen vorteilhaft sein kann. Andererseits ermöglicht die hier vorzugsweise mit einem Drehwinkelgeber (welcher ohnehin in der Antriebseinheit vorhanden sein kann oder ein Drehwinkelgeber des Rotors sein kann) ausgeführte feldorientierte Regelung eine präzise Positionierung des Rotors, was bspw. für das Einstellen der Be- und Entlade-Stellung unverzichtbar ist. Durch den Einsatz einer Antriebseinheit mit einer feldorientierten Regelung können etwaige zusätzliche Stellmotoren für die exakte Positionierung des Rotors entfallen.

Eine weitere Lösung der der Erfindung zugrunde liegenden Aufgabe ist gegeben durch eine Laborzentrifuge, welche mit einer Antriebseinheit ausgestattet ist, welche über eine Steuereinheit (wovon auch eine Regelungseinheit umfasst sein soll) derart angesteuert ist, dass ein Verfahren, wie dieses zuvor erläutert worden ist, mit der Laborzentrifuge durchgeführt werden kann.

In weiterer Ausgestaltung der erfindungsgemäßen Laborzentrifuge bildet der Rotor eine Aufnahme für das Produkt aus. Hierbei bildet der Rotor auf einer Seite des Rotors eine Zuführöffnung der Aufnahme aus. Über diese Zuführöffnung ist ein Produkt der Aufnahme zuführbar. Auf der anderen Seite des Rotors ist eine Entnahmeöffnung der Aufnahme ausgebildet. Über die Entnahmeöffnung kann das Produkt nach dem Zentrifugieren aus der Aufnahme entnommen werden. Somit kann zum Be- und Entladen das Produkt durch eine Durchgangsausnehmung des Rotors, welche jeweils endseitig einerseits die Entnahmeöffnung und andererseits die Zuführöffnung bildet, hindurchgeführt werden.

Durchaus möglich ist, dass eine Längs- oder Antriebsachse der Antriebseinheit koaxial zur Rotationsachse des Rotors ausgebildet ist. Für einen weiteren Vorschlag der Erfindung wird der Rotor über eine Längs- oder Antriebsachse einer Antriebseinheit angetrieben, welche parallel und beabstandet zu der Rotationsachse des Rotors angeordnet ist. Hierdurch ergeben sich unter Umständen verbesserte Bauraumbedingungen.

Weiter verbessert werden können die Bauraumbedingungen, wenn für diese Ausgestaltung die Antriebseinheit in Umfangsrichtung um die Rotationsachse zu der Aufnahme oder Halterung für das Produkt versetzt angeordnet ist. Somit kann in einem Teilumfangsbereich des Rotors die Antriebseinheit angeordnet sein, während in einem anderen Teilumfangsbereich des Rotors, welcher die Aufnahme oder Halterung beinhaltet, die erforderlichen Maßnahmen für das Zuführen und Entfernen des Produkts aus der Aufnahme oder Halterung getroffen werden können. Hierdurch kann sich eine besonders kompakte Bauform ergeben.

Für eine erfindungsgemäße Laborzentrifuge ist ein Sensor zur Erfassung des Drehwinkels des Rotors vorhanden. Des Weiteren verfügt die Laborzentrifuge über eine Steuereinheit. Die Steuereinheit ist mit Steuerlogik ausgestattet, welche die Antriebseinheit des Rotors auf Grundlage des erfassten Drehwinkels des Rotors steuert oder regelt.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

## KURZBESCHREIBUNG DER FIGUREN

Im Folgenden wird die Erfindung anhand in den Figuren dargestellter bevorzugter Ausführungsbeispiele weiter erläutert und beschrieben.

| | |
|---|---|
| **Fig. 1** | zeigt schematisch einen Teil einer Laborzentrifuge in einer räumlichen Ansicht schräg von vorne. |
| **Fig. 2** | zeigt schematisch den Teil der Laborzentrifuge gemäß Fig. 1 in einer räumlichen Ansicht schräg von hinten. |
| **Fig. 3** | zeigt schematisch den Teil der Laborzentrifuge gemäß Fig. 1 und 2 in einer Ansicht von oben. |
| **Fig. 4** | zeigt stark schematisiert ein Verfahren zum Betrieb einer Laborzentrifuge. |
| **Fig. 5** | zeigt während des Anlaufens einer Laborzentrifuge die Winkelstellung des Produkts über die Zeit, die Winkelgeschwindigkeit des Produkts über der Zeit sowie die Winkelbeschleunigung des Produkts über der Zeit. |
| **Fig. 6** | zeigt ein Produkt während des Anlaufens der Laborzentrifuge mit den darauf wirkenden Kräften sowie das zugehörige mechanische Freikörperbild. |
| **Fig. 7 und 8** | zeigen schematisch unterschiedliche Ansichten eines Teils einer alternativen Ausführungsform einer Laborzentrifuge. |
| **Fig. 9** | zeigt schematisch eine Laborzentrifuge mit der Wechselwirkung einer Steuereinheit mit der Antriebseinheit und Sensoren. |
| **Fig. 10** | zeigt schematisch einen Teil einer weiteren Ausgestaltung einer Laborzentrifuge in einer räumlichen Ansicht schräg von vorne. |
| **Fig. 11** | zeigt ein Detail XI der Laborzentrifuge gemäß Fig. 10 im Bereich einer Ausgleichseinrichtung. |
| **Fig. 12** | zeigt schematisch in einer räumlichen Darstellung einen Aufnahmekörper für ein Produkt. |
| **Fig. 13** | zeigt den Aufnahmekörper gemäß Fig. 12 in einer Seitenansicht mit Blickrichtung quer zur Rotationsachse. |
| **Fig. 14** | zeigt ein Detail einer fliehkraftbetätigten Verriegelungseinrichtung für die Verriegelung des Aufnahmekörpers in dem Rotor. |

## FIGURENBESCHREIBUNG

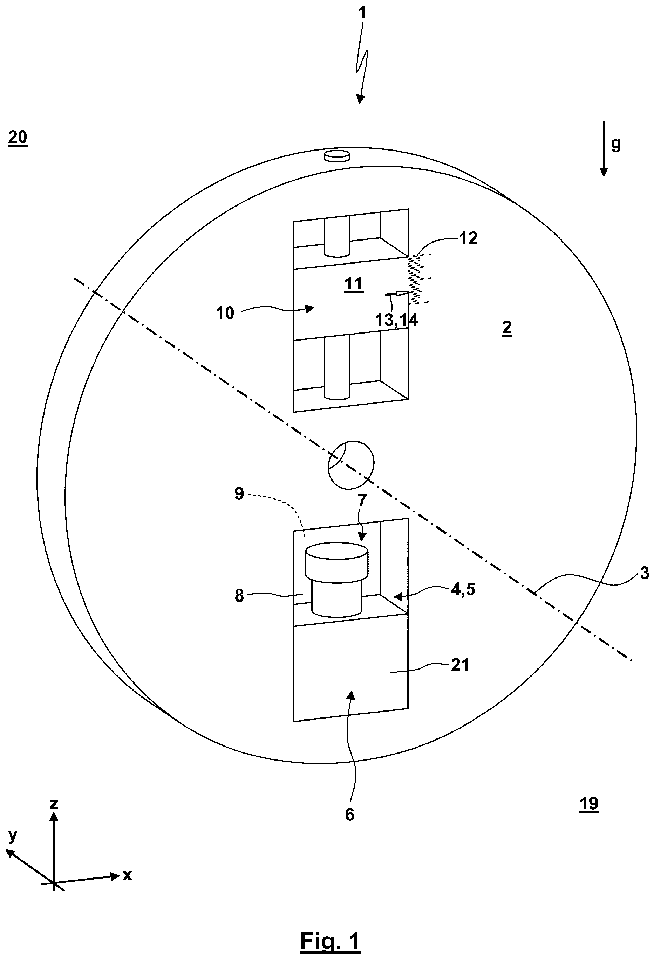

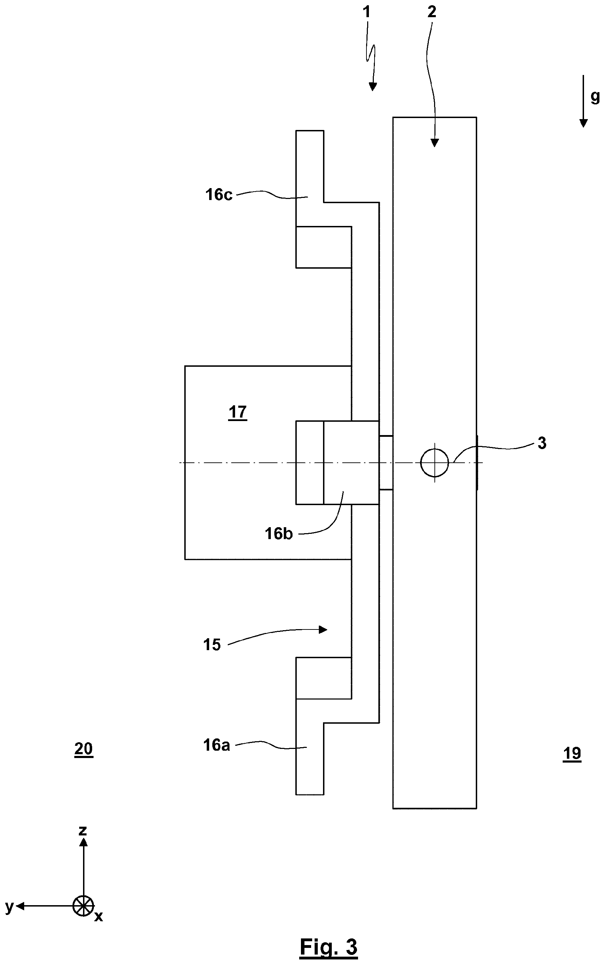

In den **Fig. 1 bis 3** sowie **7, 8** sind die Raumrichtungen mit einem kartesischen x-, y-, z-Koordinatensystem gekennzeichnet, wobei die Richtungen x, y eine horizontale Ebene aufspannen, während die Richtung z eine vertikale Richtung kennzeichnet. Des Weiteren ist in diesen Fig. mit g die Erdbeschleunigung gekennzeichnet.

In der vorliegenden Anmeldung werden die Winkelstellungen des Produkts hinsichtlich der Rotationsachse der Laborzentrifuge unter Bezugnahme auf ein Uhren-Ziffernblatt erläutert. Bei diesem fiktiven Uhren-Ziffernblatt korreliert die 12:00-Uhr-Stellung mit der z-Koordinate korreliert, wobei hier der kleine Zeiger der Uhr der Wirkung der Erdbeschleunigung g entgegengerichtet ist, während die Ausrichtung des kleinen Zeigers der Uhr in der 6:00-Uhr-Stellung der Richtung der Erdbeschleunigung entspricht und die Ausrichtung des kleinen Zeigers der Uhr in der 3:00-Uhr-Stellung der x-Richtung entspricht.

In der Anmeldung wird zur Vereinfachung Bezug genommen auf eine "Zentrifugalkraft" oder "Zentrifugalbeschleunigung". Der Anmelderin ist hierbei bewusst, dass diese streng genommen nicht existieren und die Zentrifugalkraft und Zentrifugalbeschleunigung ausschließlich in Reaktion auf eine Zentripetalbeschleunigung entstehen (vgl. auch d' Alembertsche mechanische Betrachtungsweise).

Die hier nur teilweise dargestellte Laborzentrifuge 1 verfügt über einen Rotor 2, welcher um eine horizontale, in y-Richtung orientierte Rotationsachse 3 rotiert. Für das dargestellte Ausführungsbeispiel ist der Rotor 2 in grober Näherung scheibenförmig ausgebildet, ohne dass dieses zwingend der Fall ist. Der Rotor 2 bildet eine Halterung 4 oder Aufnahme 5, mittels oder in welcher ein Produkt 6 lösbar an dem Rotor 2 gehalten ist. Für das dargestellte Ausführungsbeispiel ist die Halterung 4 oder Aufnahme 5 mit einer Durchgangsausnehmung 7 des Rotors 2 gebildet, welche sich in y-Richtung durch den Rotor 2 erstreckt und hier mit einem randgeschlossenen Querschnitt ausgebildet ist. Die Durchgangsausnehmung 7 bildet hierbei auf der in Fig. 1 zugewandten Seite eine Zuführöffnung 8 aus, über welche das Produkt 6 der Halterung 4 oder Aufnahme 5 zugeführt werden kann. Entsprechend bildet die Durchgangsausnehmung 7 auf der in Fig. 1 abgewandten Seite eine Entnahmeöffnung 9 aus, über welche das Produkt 6 aus der Halterung 4 oder Aufnahme 5 entnommen werden kann. Für den Fall, dass die Laborzentrifuge 1 Einsatz findet mit einem automatisierten Zuführen des Produkts 6 sowie einer automatisierten Entnahme des Produkts 6 kann auf diese Weise ein kontinuierlicher Fluss der Produkte 6 mit einheitlicher Förderbewegung in y-Richtung, also parallel zur Rotationsachse 3, gewährleistet werden, bei welcher das Zuführen des Produkts 6 durch die Zuführöffnung 8 in die Aufnahme 5 oder zu der Halterung 4 mit demselben Richtungssinn erfolgt wie die Entnahme des Produkts 6 nach dem Zentrifugieren durch die Entnahmeöffnung 9 aus der Halterung 4 oder Aufnahme 5.

Diametral gegenüberliegend zu der Halterung 4 oder Aufnahme 5 für das Produkt 6 besitzt der Rotor 2 eine Ausgleichseinrichtung 10, welche der Reduzierung oder Beseitigung einer Unwucht des Rotors 2 dient. Hierzu besitzt die Ausgleichseinrichtung 10 eine Ausgleichsmasse 11, deren Abstand von der Rotationsachse 3 zum Ausgleich einer etwaigen Unwucht veränderbar ist. Für das dargestellte Ausführungsbeispiel besitzt die Ausgleichseinrichtung 10 eine Skala 12, entlang welcher sich eine Kennzeichnung 13, hier ein Pfeil 14, der Ausgleichsmasse 11 mit der Veränderung des Abstands der Ausgleichsmasse 11 von der Rotationsachse 3 bewegt. Mittels der Skala 12 können gezielt bei der Verstellung der Ausgleichseinrichtung 10 vorbestimmte Stellungen der Ausgleichsmasse 11 angewählt werden, welche bspw. jeweils mit unterschiedlichen Produkten 6, insbesondere unterschiedlichen Massen der Produkte 6, korrelieren.

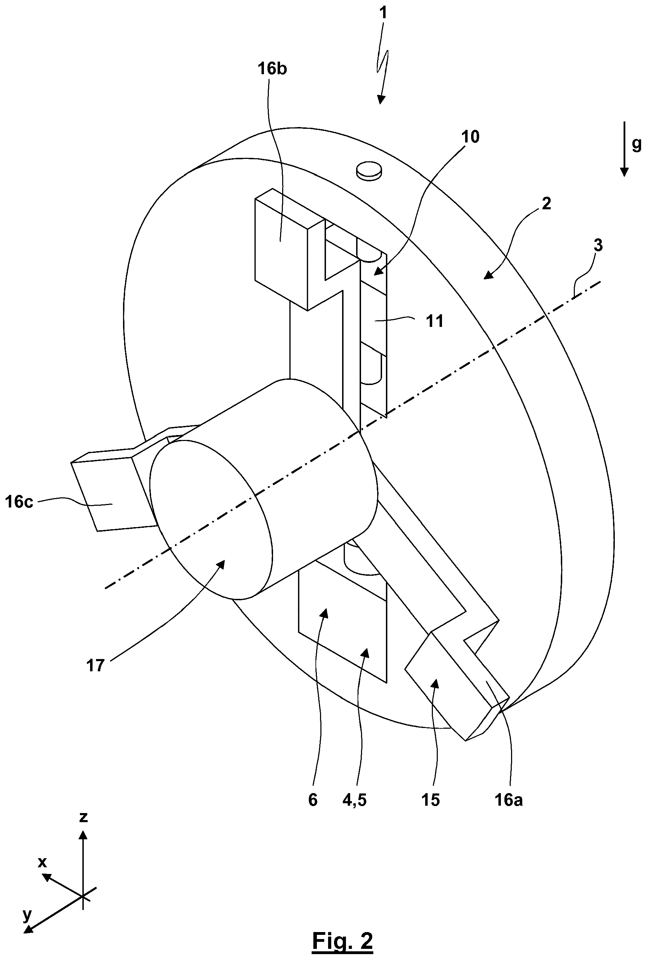

Gemäß **Fig. 2** ist der Rotor 2 verdrehbar gelagert gegenüber einem Traggestellt 15, welches für das dargestellte Ausführungsbeispiel mit drei sich radial zur Rotationsachse 3 erstreckenden Tragarmen 16a, 16b, 16c gebildet ist, welche sich in den radial außenliegenden Endbereichen an einem Sockel, Rahmen oder Gehäuse (hier nicht dargestellt) der Laborzentrifuge 1 abstützen. Der Antrieb des Rotors 2 erfolgt über eine Antriebseinheit 17. Für das Ausführungsbeispiel gemäß Fig. 1 bis 3 ist die Antriebswelle der Antriebseinheit 17 koaxial zur Rotationsachse 3 angeordnet.

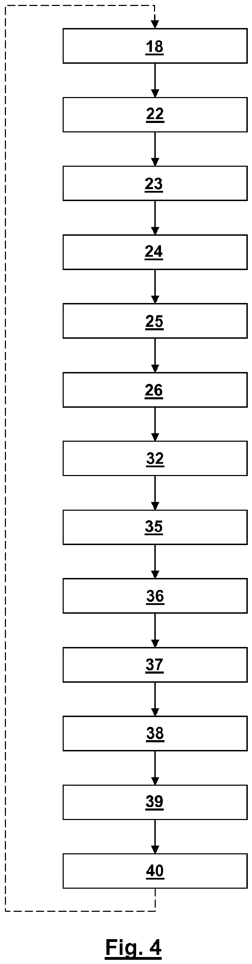

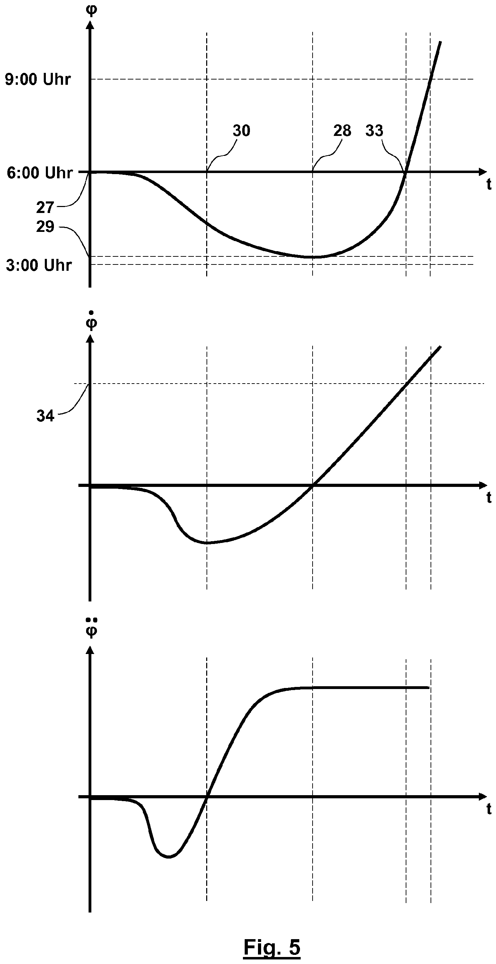

Ein Verfahren zum Betrieb einer Laborzentrifuge gemäß den Fig. 1 bis 3 wird auf Grundlage von **Fig. 4** unter Bezugnahme auf die zeitlichen Verläufe des Winkels, der Winkelgeschwindigkeit sowie der Winkelbeschleunigung gemäß **Fig. 5** erläutert:
In einem Verfahrensschritt 18 erfolgt eine Bereitstellung des Produkts 6. Diese Bereitstellung des Produkts 6 erfolgt in einem Halbraum 19, welcher sich vor dem Rotor 2 befindet und durch die Rotationsebene des Rotors 2 von einem hinter dem Rotor 2 liegenden Halbraum 20 getrennt ist. Hierbei kann eine Bereitstellung von sukzessive mittels der Laborzentrifuge 1 zu zentrifugierenden Produkten 6 einzeln, in einer Gruppe von Produkten 6 oder in einem diskontinuierlichen oder kontinuierlichen Fördervorgang mit einer Vielzahl von Produkten 6 erfolgen. Sofern das Produkt 6 nicht unmittelbar in die Halterung 4 oder Aufnahme 5 des Rotors 2 eingebracht wird, sondern unter Nutzung eines Aufnahmekörpers 21, bei welchem es sich auch um einen Probenträger handeln kann, erfolgt in einem Verfahrensschritt 22 ein Einbringen mindestens eines Produkts 6 in eine Aufnahme des Aufnahmekörpers 21. Hieran anschließend wird in einem Verfahrensschritt 23 der Rotor in eine Winkelstellung verbracht, welche eine Beladestellung bildet. Bei dieser Beladestellung handelt es sich bspw. um die in Fig. 1 eingenommene Stellung, welche eine 6:00-Uhr-Stellung ist. Hieran anschließend wird über einen geeigneten Aktuator oder eine Handhabungseinrichtung in einem Verfahrensschritt 24 das mindestens eine Produkt 6, vorzugsweise mit dem Aufnahmekörper 21, durch die Zuführöffnung 8 in die Aufnahme 5 eingebracht. In einem anschließenden Verfahrensschritt 25 erfolgt die Befestigung des Produkts 6 an der von der Aufnahme 5 ausgebildeten Halterung 4 des Rotors 2. Für den Fall der Befestigung des Produkts 6 an der Halterung 4 des Rotors 2 über einen Aufnahmekörper 21 erfolgt in diesem Verfahrensschritt die Kopplung eines Kopplungsbereichs des Aufnahmekörpers 21 mit einem entsprechenden, von der Halterung 4 ausgebildeten Gegen-Kopplungsbereichs des Rotors 2. In einem Verfahrensschritt 26 wird dann der Rotor 2 von der Antriebseinheit 17 aus der 6:00-Uhr-Stellung gemäß Fig. 1, welche hier die Zuführ- oder Belade-Stellung 27 bildet, langsam bis zu einem Zeitpunkt 28 in eine Ruhe-Winkelstellung 29 überführt. Hierzu wird der Rotor 2 zunächst bis zu einem Zeitpunkt 30 gegen den Uhrzeigersinn beschleunigt sowie hieran anschließend so abgebremst, dass dieser zum Zeitpunkt 28 in der Ruhe-Winkelstellung 29 eine Winkelgeschwindigkeit Null besitzt. Möglich ist, dass der Rotor 2 in der Ruhe-Winkelstellung 29 für eine Zeitspanne verbleibt. Vorzugsweise kehrt sich aber in der Ruhe-Winkelstellung 29 unmittelbar die Winkelgeschwindigkeit um. Vorzugsweise handelt es sich bei der Ruhe-Winkelstellung 29 um eine Winkelstellung im Bereich zwischen einer 3:00-Uhr-Stellung und 6:00-Uhr-Stellung, wobei mit einer verringerten Austritts- oder Ausfließneigung der Probe oder Substanz, einer größeren Viskosität der Substanz und einer größeren Kapillarwirkung eine größere Annäherung der Ruhe-Winkelstellung 29 an die 3:00-Uhr-Stellung erfolgen kann. Im anschließenden Verfahrensschritt 32 wird der Rotor 2 mit daran gehaltenem Produkt 6 von der Ruhe-Winkelstellung 29 mit umgekehrtem Drehrichtungssinn, also im Uhrzeigersinn, beschleunigt. Hierbei passiert das Produkt 6 zu einem Zeitpunkt 33 die 6:00-Uhr-Stellung, womit für das dargestellte Ausführungsbeispiel auch ein Passieren der Zuführ- oder Belade-Stellung 27 erfolgt. Infolge der Beschleunigung aus der Ruhe-Winkelstellung 29 besitzt der Rotor 2 mit dem Produkt 6 bei dem Passieren der 6:00-Uhr-Stellung bereits eine Winkelgeschwindigkeit 34, welche größer als Null ist. Somit kann durch die vorherige Verdrehung aus der Zuführ- oder Belade-Stellung 27 in die Ruhe-Winkelstellung 29 mit Beschleunigung aus der Ruhe-Winkelstellung 29 "Schwung geholt werden" mit der Bereitstellung eines Energieniveaus des Rotors 2 und des Produkts 6 in der 6:00-Uhr-Stellung, welche größer ist als bei einem unmittelbaren Anlaufen aus der 6:00-Uhr-Stellung. Mit weiterer Beschleunigung im Uhrzeigersinn gelangt das Produkt 6 über die 9:00-Uhr-Stellung mit immer größer werdender Winkelgeschwindigkeit in die 12:00-Uhr-Stellung, wobei je nach Antriebsleistung der Antriebseinheit 17 im Folgenden weiter das beschleunigende Moment erhöht werden kann oder dieses konstant bei einem maximalen Moment bleibt mit hieraus resultierender konstanter Winkelbeschleunigung (vgl. **Fig. 5**). Hieran anschließend erfolgt in einem Verfahrensschritt 35 das eigentliche Zentrifugieren mit der vorbestimmten Winkelgeschwindigkeit oder einem vorbestimmten Winkelgeschwindigkeitsverlauf. Ist das Zentrifugieren abgeschlossen, erfolgt ein Abbremsen des Rotors 2. Dieses erfolgt derart, dass in einem Verfahrensschritt 36 durch geeignete Ansteuerung der Antriebseinheit 17 gewährleistet ist, dass in der 12:00-Uhr-Stellung, welche die Umkehr-Winkelstellung bildet, eine Winkelgeschwindigkeit in einem Winkelgeschwindigkeitsbereich vorliegt, für welche die Zentrifugalbeschleunigung geringfügig größer ist als die Erdbeschleunigung. Vorzugsweise liegt die Zentrifugalbeschleunigung

$$a_z = \omega^2\, r$$

mit ω: Winkelgeschwindigkeit und
r: Abstand des Schwerpunkts der Probe von der Rotationsachse
in einem Bereich, für welchen n x g ≤ $a_z$ ≤ (n+1) x g mit n = 1, 2, 3, 4, 5 oder 6 ist. Möglich ist auch, dass die Steuerung der Antriebseinheit 17 derart erfolgt, dass in der Umkehr-Winkelstellung eine exakt vorgegebene Winkelgeschwindigkeit und damit eine Zentrifugalbeschleunigung vorliegt, die größer ist als die Erdbeschleunigung. Für den derart herbeigeführten Zustand erfolgt in dem Verfahrensschritt 37 das Abbremsen des Rotors 2 mit daran gehaltenem Produkt 6 auf eine Winkelgeschwindigkeit Null bis zum Erreichen einer Ruhe-Winkelstellung, welche zwischen der 3:00-Uhr-Stellung und der 9:00-Uhr-Stellung liegt, vorzugsweise zwischen der 6:00-Uhr-Stellung und der 9:00-Uhr-Stellung. Somit erfolgt das Abbremsen in einem Winkelbereich von weniger als 270°. Hieran anschließend erfolgt in einem Verfahrensschritt 38 unter Umkehrung des Drehrichtungssinns eine Rückdrehung des Rotors 2 mit daran gehaltenem Produkt 6 entgegen dem Uhrzeigersinn in eine Entlade- oder Abfuhr-Stellung, bei welcher es sich vorzugsweise um die 6:00-Uhr-Stellung handelt. In dem Verfahrensschritt 39 erfolgt dann das Lösen des Produkts 6 aus der Halterung 4. Schließlich kann dann in dem Verfahrensschritt 40 die Entnahme des Produkts 6 aus dem Rotor 2 erfolgen, was vorzugsweise durch die Entnahmeöffnung 9 erfolgt.

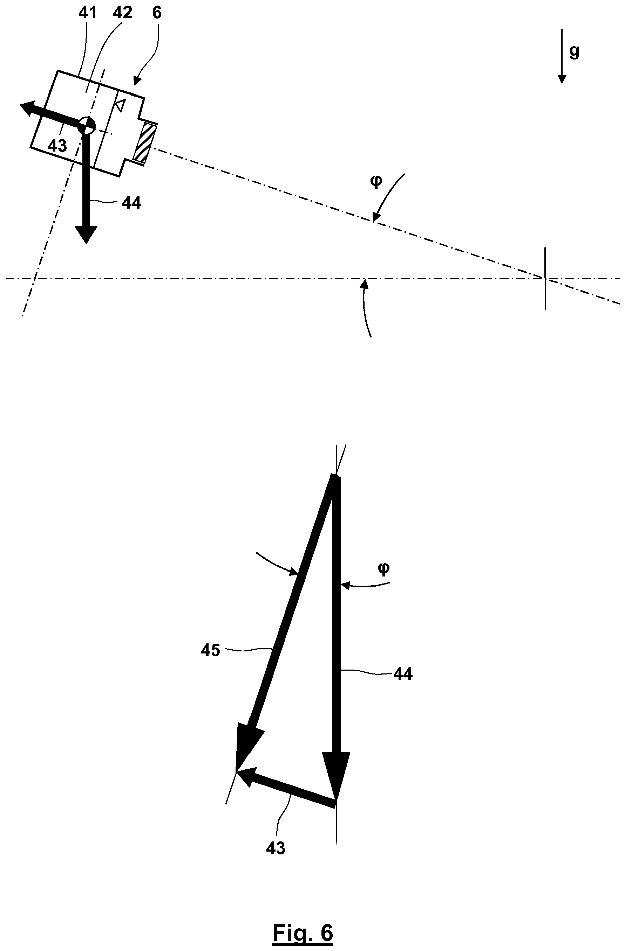

**Fig. 6** zeigt schematisch während des Anlaufens ungefähr in einer 10:00-Uhr-Stellung das Produkt 6 mit den auf das Produkt wirkenden Kräften (wobei hierbei eine Tangentialbeschleunigung infolge der Beschleunigung des Rotors 2 während des Anlaufens zwecks Vereinfachung weggelassen ist). Aus Fig. 6 ist ersichtlich, dass ohne Zentrifugalkraft infolge der Gewichtskraft 44 die in dem Behälter 41 des Produkts angeordnete Probe 42 mit einer Komponente der Gewichtskraft 44 radial nach innen beschleunigt würde, also von dem Boden des Behälters 41 weg in Richtung des Deckels. Damit eine sich aus der Zentrifugalkraft 43 und der Gewichtskraft 44 ergebende Resultierende 45 keine Kraftkomponente radial nach innen aufweist, muss, wie sich aus dem Freikörperbild gemäß Fig. 6 ergibt, das Folgende gelten:

$$\sin \varphi = F_z / F_G$$

mit:

$F_z$: Zentrifugalkraft,
$F_G$: Gewichtskraft und
φ: Winkel zwischen der radialen Verbindungsachse der Rotationsachse 3 und des Schwerpunkts des Produkts 6 gegenüber der Horizontalebene.

Da sich die Zentrifugalkraft $F_z$ aus dem Produkt des Quadrats der Winkelgeschwindigkeit und des Abstands des Schwerpunkts des Produkts 6 von der Rotationsachse 3 ergibt, muss die mittels der Antriebseinheit 17 herbeigeführte Geschwindigkeit für Winkelstellungen oberhalb der 9:00-Uhr-Stellung das folgende Kriterium erfüllen:

$$\dot{\varphi} \geq \sqrt{\frac{g\ \sin\varphi}{R}}$$

Hieraus folgt, dass für φ = 90° in der Umkehr-Winkelstellung die Zentrifugalbeschleunigung $\dot{\varphi}^2\, R$ der Erdbeschleunigung g entsprechen muss oder größer als diese sein muss.

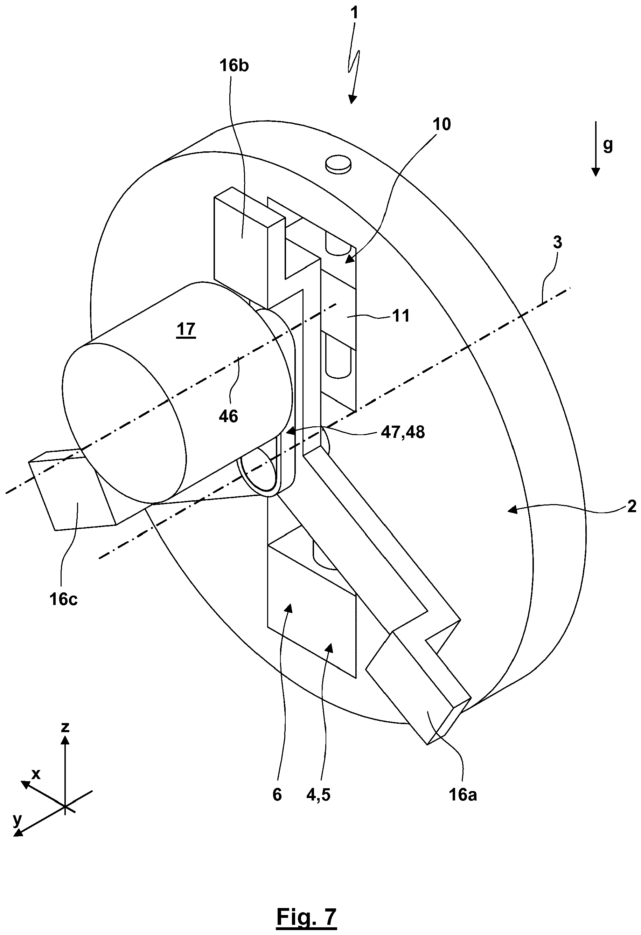

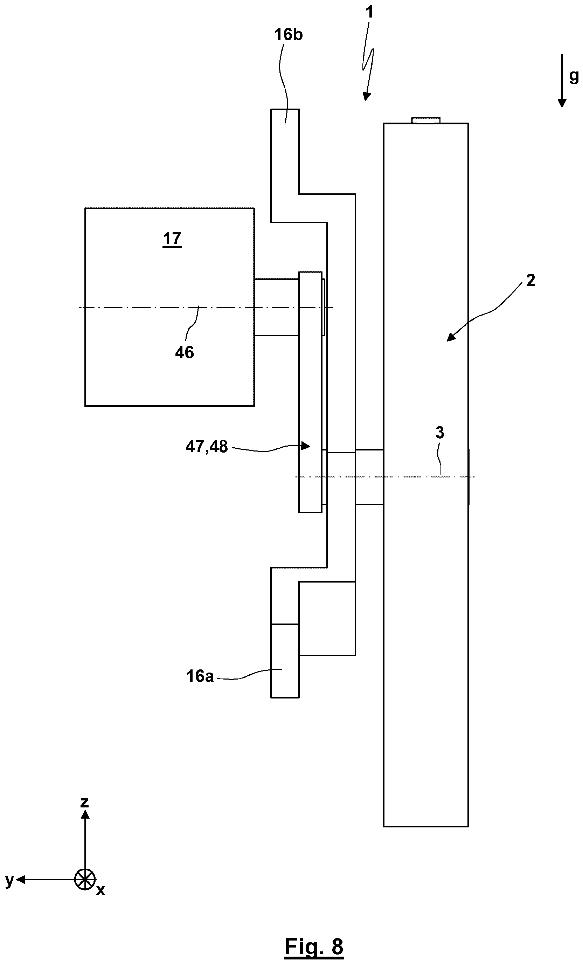

**Fig. 7 und 8** zeigen eine alternative Ausführungsform einer Laborzentrifuge 1, bei welcher die Antriebseinheit 17 nicht koaxial zu der Rotationsachse 3 angeordnet ist. Vielmehr ist eine Antriebs- oder Längsachse 46 der Antriebseinheit 17 und einer Antriebswelle derselben parallel und beabstandet zu der Rotationsachse 3 angeordnet. In diesem Fall ist die Antriebseinheit 17 über eine getriebliche Verbindung 47, bspw. einen Zugmitteltrieb 48, mit dem Rotor 2 gekoppelt, wobei die getriebliche Verbindung 47 auch den Versatz der Antriebs- oder Längsachse 46 gegenüber der Rotationsachse 3 gewährleistet, wobei zusätzlich mittels der getrieblichen Verbindung 47 eine Unter- oder Übersetzung erfolgen kann. Für das dargestellte Ausführungsbeispiel ist die Antriebseinheit 17 hinsichtlich der Rotationsachse 3 diametral gegenüberliegend zu der Aufnahme 5 des Rotors 2 in der 6:00-Uhr Stellung angeordnet. Vorzugsweise ist die Antriebseinheit 17 in der oberen Halbebene des Rotors (9:00-Uhr-Stellung bis 3:00-Uhr-Stellung) angeordnet, während in der Zuführ- oder Beladestellung 27 und/oder der Entladestellung die Aufnahme 5 in der unteren Halbebene (3:00-Uhr-Stellung bis 9:00-Uhr-Stellung) angeordnet sein kann, womit die Antriebseinheit 17 das Zuführen und Entfernen des Produkts 6 von dem Rotor 2 nicht behindert und sich verbesserte Bauraumbedingungen ergeben. Zu diesem Zweck hat das Traggestell 15 wie dargestellt im Bereich der Aufnahme 5 und vor sowie hinter dieser in der Belade-Stellung 27 und/oder Entlade-Stellung eine Lücke oder Aussparung, durch welche die Aufnahme 5 zugänglich ist.

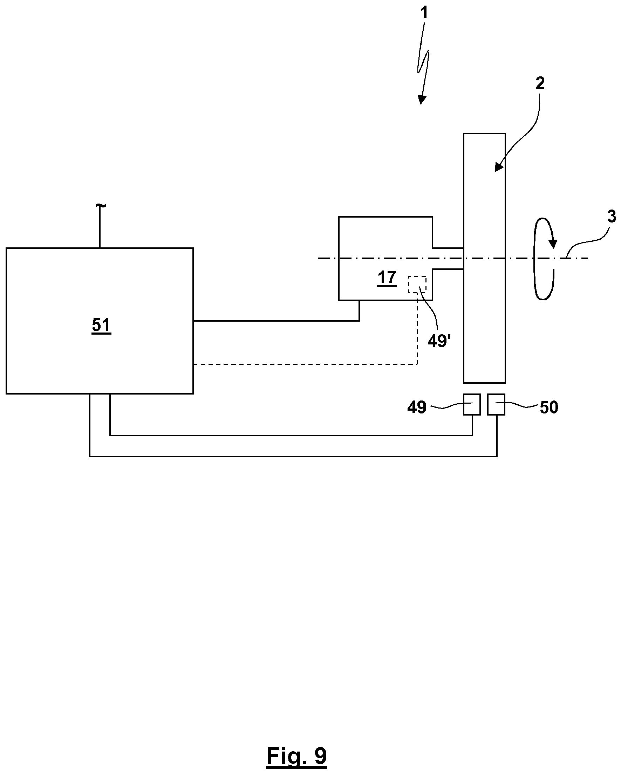

Fig. 9 zeigt stark schematisiert einen Sensor 49, welcher eine Winkelstellung des Rotors 2 erfasst, sowie einen Sensor 50, welcher die Winkelgeschwindigkeit des Rotors 2 erfasst. Die Messsignale der Sensoren 49, 50 werden einer Steuereinheit 51 zugeführt, welche auf dieser Grundlage die Antriebseinheit 17 zur Durchführung des zuvor erläuterten Verfahrens ansteuert. Hierbei kann die Steuereinheit 51 mit weiteren Steuereinheiten kommunizieren, bspw. auch für die Ansteuerung von Handhabungseinrichtungen und Be- und Entladeeinrichtungen für das Be- und Entladen des Produkts 6. Möglich ist auch, dass lediglich ein Drehwinkel über einen Sensor 49 erfasst wird und aus diesem ein Winkelgeschwindigkeitssignal abgeleitet wird. Möglich ist auch, dass die Antriebseinheit 17 ohnehin drehwinkelgesteuert ist, so dass lediglich die Steuereinheit 51 einen vorgegebenen Drehwinkel aussteuert, und/oder dass ein Winkelsignal der Antriebseinheit 17 von der Steuereinheit 48 verarbeitet wird. In Fig. 9 ist gestrichelt dargestellt, dass der Sensor 49 für die Erfassung der Winkelstellung des Rotors 2 (oder entsprechend auch ein Sensor 50 für die Erfassung der Winkelgeschwindigkeit des Rotors 2) auch als unmittelbar in die Antriebseinheit 17 integrierter Sensor ausgebildet sein kann, welcher bspw. ohnehin für den Betrieb der Antriebseinheit 17 in dieser vorgesehen ist.

Bei den Produkten 6 handelt es sich bspw. um Blut-Röhrchen, welche typische Dimensionen von 13 x 75 mm, 13 x 100 mm oder 16 x 100 mm besitzen können. Vorzugsweise erfolgt die Beschleunigung derart, dass mit dem Erreichen einer horizontalen Ausrichtung des Produkts (9:00-Uhr-Stellung) bereits eine Zentrifugalbeschleunigung größer 2 x g erreicht worden ist. Entsprechendes gilt für das Abbremsen, wobei hier vorzugsweise in der Umkehr-Winkelstellung, also der 12:00-Uhr-Stellung, eine Zentrifugalbeschleunigung von zumindest 2 x g wirkt, welche dann über einen Winkelbereich von 180° bis zur 6:00-Uhr-Stellung auf die Winkelgeschwindigkeit Null abgebremst wird. Hierbei ist ein Überschwingen über die 6:00-Uhr-Stellung in dem Maße möglich, dass eine weitgehende Kompensation der Wirkung von Schwerefeld, Schwerkraft und Bremswirkung auf die Produkte 6 erzeugt wird, um eine erneute Durchmischung der zuvor mittels der Zentrifugation separierten Bestandteile der Probe 42 zu verhindern. Unter Umständen können Gel-Röhrchen als Behälter 41 Einsatz finden, welche unter Umständen den Beschleunigungs- und Bremsverlauf unkritischer für die Probe 42 gestalten. Ist der Behälter 41 in der Aufnahme 5 oder Halterung 4 mit der Öffnung in Richtung der Rotationsachse 3 und dem Boden radial nach außen von der Rotationsachse 3 angeordnet mit radialer Orientierung der Längsachse des Behälters 41, so wirkt das Schwerefeld für die Trennung durch Zentrifugation gezielt in Richtung des Bodens des Behälters 41. Durch den dann bei der Entnahme des Behälters 41 horizontalen Verlauf der Trennungsgrenzen wird das Risiko eines Durchmischens bei der Entnahme aus der Laborzentrifuge 1 zumindest reduziert. Ein derartiges Ergebnis wäre ansonsten nur durch Ausschwingrotoren zu erreichen, während die Trennungsgrenze bei Festwinkelrotoren typischerweise unter einem Winkel erfolgt, der nicht senkrecht zur Normalen des Gefäßbodens steht.

Vorzugsweise ist der Aufnahmekörper 21 als ein Gefäßhalter ausgebildet, der fest mit dem Rotor 2 montiert sein kann oder auswechselbar sein kann. Ein auswechselbarer Gefäßhalter ist für die Verwendung als Teil eines linearen oder tellerförmigen Transportsystems bestimmt, durch welches das Gefäß zu weiteren Prozessschritten transportiert werden kann. Die Antriebseinheit 17 und das Traggestell 15 sind in einem nicht dargestellten Gehäuse montiert, welches die Sicherheit gewährleistet. Durch Dämpfungselemente zwischen Antrieb 17, Traggestell 15 und/oder Gehäuse wird die Übertragung von Vibrationen auf das Gehäuse stark reduziert.

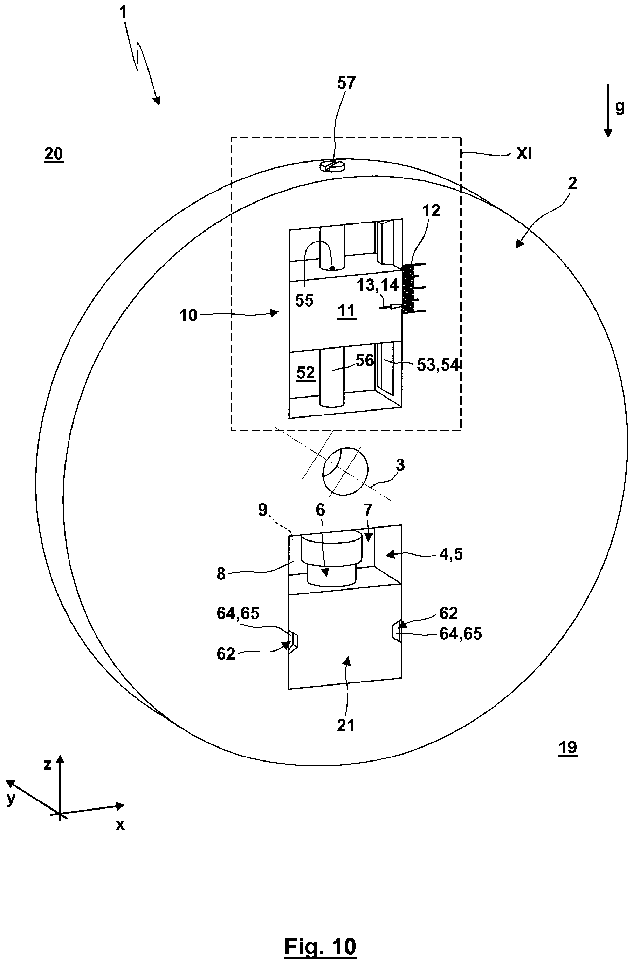

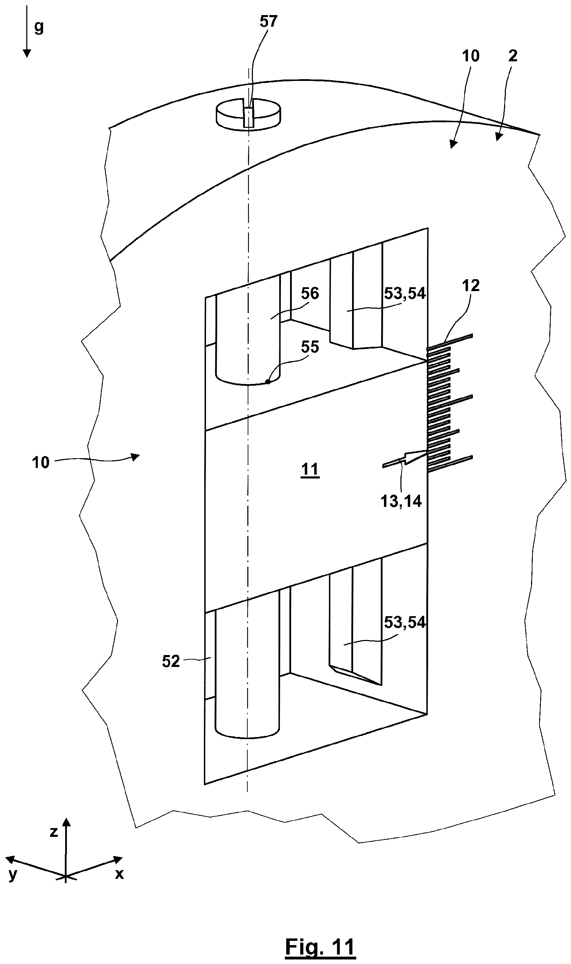

Fig. 10 und 11 zeigen eine weitere Ausgestaltung eines Rotors 2 mit Ausgleichseinrichtung 10. Die Ausgleichsmasse 11 ist in einer randgeschlossenen Durchgangsausnehmung 52 angeordnet, welche hier einen rechteckigen Querschnitt besitzt. Die radial orientierten Begrenzungen der Durchgangsausnehmung 52 bilden zwei radial orientierte parallele Führungen 53, insbesondere Rippen 54, aus, zwischen denen die Ausgleichsmasse 11 zur Veränderung von deren Abstand von der Rotationsachse 3 geführt ist. Zur Ermöglichung der Montage kann die Ausgleichsmasse 11 zwei- oder mehrteilig ausgebildet sein. Die Ausgleichsmasse 11 besitzt eine radial zur Rotationsachse 3 orientierte durchgehende Gewindebohrung 55, durch welche sich eine Betätigungsstange 56 erstreckt. Die Betätigungsstange 56 verfügt in dem mit der Ausgleichsmasse 11 und deren Gewindebohrung 55 in Wechselwirkung tretenden Axialbereich über ein hier nicht dargestelltes Außengewinde. Die Betätigungsstange 56 ist in ihren beiden Endbereichen verdrehbar, aber axial fixiert gegenüber dem Rotor 2 gelagert. Die Betätigungsstange 56 kragt mit dem radial außenliegenden Endbereich aus der Mantelfläche des Rotors 2 mit einer Betätigungs- oder Eingriffsfläche 57 aus. Mit einem in die Betätigungs- oder Eingriffsfläche 57, bspw. einem Schraubendreher, einem Sechskant u. ä., kann manuell oder über einen automatischen, von der Steuereinheit 51 betätigten Aktuator die Betätigungsstange 56 verdreht werden, womit in der Art eines Spindeltriebs die Ausgleichsmasse so bewegt wird, dass sich der Abstand der Ausgleichsmasse 11 von der Rotationsachse 3 verändert, womit der Ausgleich einer etwaigen Unwucht erfolgen kann.

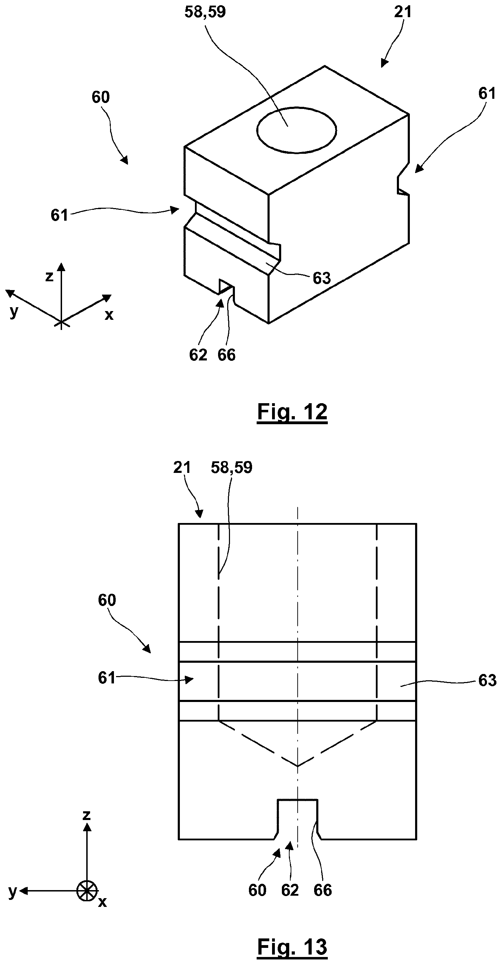

Aus den Fig. 10, 12, 13 und 14 sind weitere Details zur Ausgestaltung des Aufnahmekörpers 21 sowie dessen Kopplung mit dem Rotor 2 ersichtlich. Wie in Fig. 12 und 13 zu erkennen ist, ist der Aufnahmekörper 21 klotzartig oder quaderförmig ausgebildet. Der Aufnahmekörper 21 verfügt über eine Aufnahme 58, in welche das Produkt 6 von oben eingesetzt werden kann. Vorzugsweise handelt es sich bei der Aufnahme 58 um eine von oben entgegen der z-Richtung in den Aufnahmekörper 21 eingebrachte Sacklochbohrung 59, in welche ein Produkt 6 mit zylindrischer Mantelfläche, bspw. ein Behälter oder Reagenzglas, eingesetzt werden kann, wobei vorzugsweise das Produkt 6 reibschlüssig oder ausschließlich durch die Erdbeschleunigung und etwaige wirkende Zentrifugalkräfte in der Aufnahme 58 gesichert ist. Des Weiteren verfügt der Aufnahmekörper 21 über einen Kopplungsbereich 60, über welchen der Aufnahmekörper 21 mit dem Rotor 2 koppelbar ist. Für das dargestellte Ausführungsbeispiel verfügt der Kopplungsbereich 60 über zwei Teilkopplungsbereiche 61, 62:

Der Teilkopplungsbereich 61 ist hier mit zwei in y-Richtung orientierten Nuten 63 ausgebildet, welche auf gegenüberliegenden Seiten des Aufnahmekörpers 21 angeordnet sind. Für das dargestellte Ausführungsbeispiel besitzen die Nuten 63 einen trapezförmigen, sich nach außen erweiternden Querschnitt. Der Rotor 2 bildet im Bereich der Durchgangsausnehmung 7 auf gegenüberliegenden Seiten Führungen 64, hier Rippen 65, aus, deren Formgebung und Position mit der Formgebung und Position der Nuten 63 übereinstimmt. Mit dem Einbringen des Aufnahmekörpers 21 mit darin angeordnetem Produkt in die Aufnahme 5 treten die Führungen 64 oder Rippen 65 ein in die Nuten 63, womit der Aufnahmekörper 21 parallel zur Rotationsachse 3 geführt ist. Entsprechend kann eine Entnahme des Aufnahmekörpers 21 in Richtung der Rotationsachse 3 (nach vorne und/oder nach hinten) erfolgen. Möglich ist, dass die axiale Position des Aufnahmekörpers 21 lediglich mit einer geringen Reibung zwischen den Nuten 63 und Rippen 65 gesichert ist. Infolge der Wechselwirkung zwischen den Nuten 63 und Rippen 65 verbleibt somit zwischen Aufnahmekörper 21 und Rotor 2 lediglich ein axialer Freiheitsgrad parallel zur Rotationsachse 3.

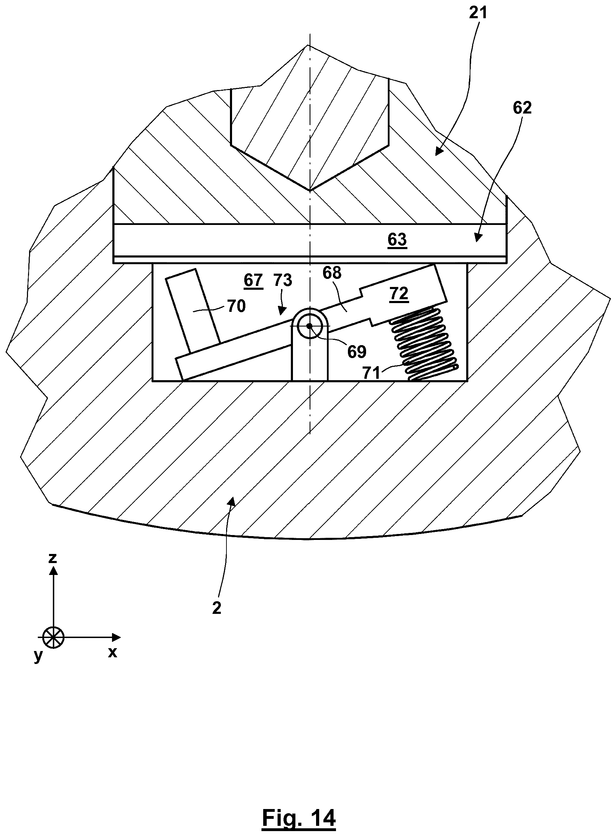

Zur Beseitigung dieses axialen Freiheitsgrads während der Zentrifugation dient der Teilkopplungsbereich 62. Dieser ist gebildet mit einer Nut 66, welche sich auf der Unterseite des Aufnahmekörpers 21 mit Erstreckung in x-Richtung, also quer zur Rotationsachse 3, befindet. Wie in Fig. 14 zu erkennen ist, verfügt die Wandung des Rotors 2, welche die Durchgangsausnehmung 7 radial nach außen begrenzt, über eine Vertiefung 67 in welcher ein Schwenkhebel 68 verschwenkbar um eine Schwenkachse 69, welche parallel y-Achse orientiert ist, gelagert ist. Ein Endbereich des Schwenkhebels 68 trägt ein Verriegelungselement 70, während der andere Endbereich des Schwenkhebels 68 mittels einer Feder 71 derart beaufschlagt ist, dass ohne Rotation des Rotors 2 der Schwenkhebel 68 eine Schwenkstellung einnimmt, in welcher das Verriegelungselement 70 derart radial nach außen verlagert ist, dass dieses nicht in Wechselwirkung mit dem Aufnahmekörper 21 tritt. Ist hingegen der Aufnahmekörper 21 mittig in die Durchgangsausnehmung 7, also entsprechend der vorbestimmten Axialposition, angeordnet, befinden sich die Nut 63 und das Verriegelungselement 70 mit dem Schwenkhebel 68 in einer gemeinsamen Ebene, welche quer zur Rotationsachse 3 orientiert ist. Auf der dem Verriegelungselement 70 abgewandten Seite trägt der Schwenkhebel 68 eine Masse 72. Wird in der vorbestimmten Axialposition des Aufnahmekörpers 21 der Rotor 2 in Rotation versetzt, wirkt auf die Masse 72 eine Zentrifugalkraft, welche unter Beaufschlagung der Feder 71 dazu führt, dass das Verriegelungselement 70 eintritt in die Nut 63, womit eine formschlüssige Verriegelung mit Beseitigung des genannten axialen Freiheitsgrads in y-Richtung gebildet ist. Hierbei wird die Einpressung des Verriegelungselements 70 in die Nut 63 mit zunehmender Winkelgeschwindigkeit des Rotors 2 erhöht. Mit dem Abbremsen und Stillstand des Rotors 2 wird hingegen automatisiert infolge der dann zur Wirkung kommenden Feder 71 mit Entfall der Zentrifugalkraft die Verriegelung wieder gelöst, womit eine einfache Entnahme des Aufnahmekörpers 21 möglich ist. Mit der Wechselwirkung zwischen der Nut 63 und den Schwenkhebel 68 mit der Feder 71, der Masse 72 und dem Verriegelungselement 70 ist somit eine fliehkraftbetätigte Verriegelungseinrichtung 73 gebildet. Jedwede anderweitige Rast- und/oder Verriegelungseinrichtung zur Fixierung des Aufnahmekörpers 21 hinsichtlich eines, mehrerer oder sämtlicher Freiheitsgrade kann ebenfalls Einsatz finden.

Für das dargestellte Ausführungsbeispiel besitzt der Aufnahmekörper 21 lediglich eine Aufnahme 58. Es versteht sich, dass auch mehrere Aufnahmen 58 für mehrere Produkte 6 an einem einzigen Aufnahmekörper 21 vorgesehen sein können.

Sowohl die Ausgleichsmasse 11 als auch der Aufnahmekörper 21 sind gegen eine Verdrehung um die Rotationsachse 3 mit großflächigen Kontaktflächen gesichert. Von Vorteil ist, wenn der Rotor 2 ebene Stirnseiten besitzt, aus welchen insbesondere der Aufnahmekörper 21 und die Ausgleichsmasse 11 nicht parallel zu der Rotationsachse 3 herausragen, da ansonsten ein erhöhter Luftwiderstand entstehen würde mit Erhöhung des Leistungsbedarfs für die Erzeugung der Rotationsbewegung des Rotors 2. Möglich ist, dass die Führung der Ausgleichsmasse 11 und/oder des Aufnahmekörpers 21 an dem Rotor 2 in der Art einer "Schwalbenschwanzführung" erfolgt. Möglich ist auch, dass die Ausnehmungen 7, 52, bspw. durch eine fliehkraftbetätigt selbstschließende oder manuell geschlossene Abdeckplatte, während der Zentrifugation nach außen geschlossen sind.

Infolge der hohen Beschleunigung des Rotors kann ein aus der Drallerhaltung resultierendes Kippmoment auf das Traggestell 15 oder ein Gehäuse der Laborzentrifuge 1 ausgeübt werden. Um zu vermeiden, dass sich die Laborzentrifuge 1 infolge dieses Kippmoments von einer Unterlage oder anderweitigen Halterung löst, kann zur Kompensation des Kippmoments ein Zusatzrotor, insbesondere eine Rotorscheibe, gleichzeitig mit der Beschleunigung des Rotors 2 in eine gegenläufige Drehrichtung beschleunigt werden. Hierdurch kann es unabhängig zu der wirkenden Beschleunigung zu einem Drallausgleich bzw. Ausgleich des Kippmoments kommen. Besitzt der Zusatzrotor dasselbe Massenträgheitsmoment wie der Rotor 2, kann der Zusatzrotor mit derselben Winkelgeschwindigkeit und Beschleunigung angetrieben werden. Wird ein Zusatzrotor mit anderem Massenträgheitsmoment eingesetzt, muss eine entsprechende Über- oder Untersetzung der Drehbewegung erfolgen.

Es versteht sich, dass gewährleistet sein muss, dass etwaige Ausnehmungen oder Öffnungen des Rotors 2, welche für den Betrieb genutzt werden müssen, wie bspw. die Zuführöffnung 8 und/oder die Entnahmeöffnung 9, zumindest in den relevanten Betriebsstellungen durch den Zusatzrotor nicht abgedeckt sind.

Während zuvor davon ausgegangen worden ist, dass eine Laborzentrifuge 1 auf einer vorzugsweise horizontalen Unterlage steht, kann für eine Ausführungsform der Erfindung auch eine Montage der Laborzentrifuge 1 an einer Laborwand oder an einer anderen vertikalen Tragwand eines Einrichtungsgegenstands, Trägers u. ä. erfolgen, wobei damit die Rotationsebene des Rotors 2 parallel zur Wand ausgerichtet sein kann, womit eine besonders flache und raumsparende Bauweise ermöglicht ist.

Vorzugsweise ist der Rotor 2 in einer Leichtbauweise gebildet. Dies hat einerseits Vorteile hinsichtlich des zuvor genannten Kippmoments, welches mit verringerter Masse bzw. verringertem Massenträgheitsmoment kleiner wird. Andererseits können für einen Rotor 2 mit einem kleinen Massenträgheitsmoment die erforderlichen hohen Beschleunigungen mit vergleichsweise kleinen Antriebsmomenten der Antriebseinheit 17 herbeigeführt werden. Für die Ausführung in Leichtbauweise können bspw. leichte Aluminiumlegierungen, kohlefaser-verstärkte Kunststoffe, eine kombinierte Kunststoff-/Metallbauweise Einsatz finden. Ebenfalls möglich ist, dass anstelle eines massiven Rotors 2 dieser mit gewichtsreduzierenden Materialaussparungen (durchgehende oder nichtdurchgehende Ausnehmungen bspw. in radialer Richtung und/oder parallel zur Rotationsachse) ausgestattet ist.

Mit dem vorliegenden Anmeldungsentwurf wird teilweise auf einen Drehrichtungssinn "im Uhrzeigersinn" oder "gegen den Uhrzeigersinn" Bezug genommen. Das Entsprechende gilt dann auch für einen anderen Drehrichtungssinn.

Unter Umständen ist eine Fixierung des Rotors 2 in der Be- und/oder Entladestellung wünschenswert. Für eine Ausgestaltung der Erfindung kann ein fixierendes Haltemoment auf den Rotor 2 von der Antriebseinheit 17 aufgebracht werden, so dass keine zusätzlichen Fixiereinrichtungen erforderlich sind. Durchaus möglich ist aber auch, dass eine Fixierung des Rotors 2, der Antriebseinheit 17 und/oder der getrieblichen Verbindung 47 über eine Rast- oder Verriegelungseinrichtung erfolgt, welche manuell und/oder automatisch über einen Aktuator, welcher von der Steuereinheit 51 angesteuert sein kann, betätigt und/oder gelöst werden kann.

**BEZUGSZEICHENLISTE**

| | |
|---|---|
| 1 | Laborzentrifuge |
| 2 | Rotor |
| 3 | Rotationsachse |
| 4 | Halterung |
| 5 | Aufnahme |
| 6 | Produkt |
| 7 | Durchgangsausnehmung |
| 8 | Zuführöffnung |
| 9 | Entnahmeöffnung |
| 10 | Ausgleichseinrichtung |
| 11 | Ausgleichsmasse |
| 12 | Skala |
| 13 | Kennzeichnung |
| 14 | Pfeil |
| 15 | Traggestell |
| 16 | Tragarm |
| 17 | Antriebseinheit |
| 18 | Verfahrensschritt |
| 19 | Halbraum |
| 20 | Halbraum |
| 21 | Aufnahmekörper |
| 22 | Verfahrensschritt |
| 23 | Verfahrensschritt |
| 24 | Verfahrensschritt |
| 25 | Verfahrensschritt |
| 26 | Verfahrensschritt |
| 27 | Zuführ- oder Belade-Stellung |
| 28 | Zeitpunkt |
| 29 | Ruhe-Winkelstellung |
| 30 | Zeitpunkt |
| 32 | Verfahrensschritt |
| 33 | Zeitpunkt |
| 34 | Winkelgeschwindigkeit |
| 35 | Verfahrensschritt |
| 36 | Verfahrensschritt |
| 37 | Verfahrensschritt |
| 38 | Verfahrensschritt |
| 39 | Verfahrensschritt |
| 40 | Verfahrensschritt |
| 41 | Behälter |
| 42 | Probe |
| 43 | Zentrifugalkraft |
| 44 | Gewichtskraft |
| 45 | Resultierende |
| 46 | Antriebs- oder Längsachse |
| 47 | getriebliche Verbindung |
| 48 | Zugmitteltrieb |
| 49 | Sensor |
| 50 | Sensor |
| 51 | Steuereinheit |

52 Durchgangsausnehmung
53 Führung
54 Rippe
55 Gewindebohrung
56 Betätigungsstange
57 Betätigungs- oder Eingriffsfläche
58 Aufnahme
59 Sacklochbohrung
60 Kopplungsbereich
61 Teilkopplungsbereich
62 Teilkopplungsbereich
63 Nut
64 Führung
65 Rippe
66 Nut
67 Vertiefung
68 Schwenkhebel
69 Schwenkachse
70 Verriegelungselement
71 Feder
72 Masse
73 fliehkraftbetätigte Verriegelungseinrichtung

**Patentansprüche**

1. Verfahren zum Betrieb einer Laborzentrifuge (1) zum Zentrifugieren eines Produkts (6), wobei die Laborzentrifuge (1) einen Rotor (2) aufweist, der um eine horizontale Rotationsachse (3) rotiert und an dem das Produkt (6) beabstandet von der Rotationsachse (6) gehalten ist, wobei

a) der Rotor (2) aus einer Ruhe-Winkelstellung (27) des Produkts (6), in der das Produkt (6) zwischen einer 3:00-Uhr-Stellung und einer 9:00-Uhr-Stellung angeordnet ist und eine Winkelgeschwindigkeit von Null besitzt, derart beschleunigt wird, dass mit dem erstmaligen Erreichen einer Umkehr-Winkelstellung des Rotors (2), in der das Produkt (6) in einer 12:00-Uhr-Stellung angeordnet ist, der Rotor (2) eine Winkelgeschwindigkeit erreicht hat, welche so groß ist, dass die auf das Produkt (6) wirkende Zentrifugalbeschleunigung größer ist als die Erdbeschleunigung, und/oder
b) der Rotor (2) aus einer Umkehr-Winkelstellung des Produkts (6), in der das Produkt (6) in einer 12:00-Uhr-Stellung angeordnet ist und eine Winkelgeschwindigkeit besitzt, welche so groß ist, dass die auf das Produkt (6) wirkende Zentrifugalbeschleunigung größer ist als die Erdbeschleunigung, bis zum erstmaligen Erreichen einer Ruhe-Winkelstellung des Rotors (2), in der das Produkt (6) zwischen einer 3:00-Uhr-Stellung und einer 9:00-Uhr-Stellung angeordnet ist, auf eine Winkelgeschwindigkeit von Null abgebremst wird,

**dadurch gekennzeichnet, dass**

c) während des Beschleunigens und/oder Abbremsens das Produkt (6) eine 6:00-Uhr-Stellung passiert und das Beschleunigen aus der Ruhe-Winkelstellung (27) bis zum erstmaligen Erreichen der Umkehr-Winkelstellung und/oder das Abbremsen aus der Umkehr-Winkelstellung bis zum erstmaligen Erreichen der Ruhe-Winkelstellung über einen Winkelbereich zwischen 180° und 270° erfolgt,
d) wobei ein Be- und Entladen des Produkts (6) zu und von dem Rotor (2) in einer Be- und Entladestellung, welche der 6:00-Uhr-Stellung entspricht, erfolgt und

da) anschließend an ein Beladen zunächst mittels des Antriebs der Rotor (2) mit einem ersten Drehrichtungssinn in die Ruhe-Winkelstellung (27) überführt wird, von welcher dann die Beschleunigung mit einem entgegengesetzten zweiten Drehrichtungssinn in Richtung der Umkehr-Winkelstellung erfolgt, und/oder
db) bis zur Ruhe-Winkelstellung während des Abbremsens eine Verdrehung des Rotors (2) mit einem ersten Drehrichtungssinn erfolgt mit anschließendem Zurückdrehen mit einem entgegengesetzten zweiten Drehrichtungssinn von der Ruhe-Winkelstellung in die Entladestellung.

2. Verfahren nach Anspruch 1, **dadurch gekennzeichnet, dass** in der Umkehr-Winkelstellung die Winkelgeschwindigkeit so groß ist, dass die auf das Produkt (6) wirkende Zentrifugalbeschleunigung zumindest dem Zweifachen der Erdbeschleunigung entspricht.

3. Verfahren nach einem der Ansprüche 1 bis 2, **dadurch gekennzeichnet, dass** das Produkt (6) automatisch

a) dem Rotor (2) zugeführt und/oder
b) von dem Rotor (2) entfernt wird.

4. Verfahren nach Anspruch 3, **dadurch gekennzeichnet, dass** das Produkt (6) mit einer Bewegung mit demselben Richtungssinn automatisch

a) dem Rotor (2) zugeführt und
b) nach dem Zentrifugieren von dem Rotor (2) entfernt

wird.

5. Verfahren nach einem der Ansprüche 1 bis 4, **dadurch gekennzeichnet, dass** über eine Ausgleichseinrichtung (10) eine von der Masse des Produkts (6) abhängige Unwucht des Rotors (2) reduziert oder beseitigt wird.

6. Verfahren nach einem der vorhergehenden Ansprüche, **dadurch gekennzeichnet, dass** das Produkt (6) über eine Halterung (4) an dem Rotor (2) fixiert wird.

7. Verfahren nach Anspruch 6, **dadurch gekennzeichnet, dass** die Halterung (4) mit einem Aufnahmekörper gebildet ist, welcher eine Aufnahme ausbildet, in welcher das Produkt (6) angeordnet wird, und welcher einen Kopplungsbereich ausbildet, über welchen der Aufnahmekörper mit dem in der Aufnahme angeordneten Produkt (6) an dem Rotor (2) befestigt wird.

8. Verfahren nach einem der vorhergehenden Ansprüche, **dadurch gekennzeichnet, dass** über einen Sensor (46) ein Drehwinkel des Rotors (2) erfasst wird und die oder eine Antriebseinheit (17) des Rotors (2) auf Grundlage des erfassten Drehwinkels gesteuert oder geregelt wird.

9. Verfahren nach einem der vorhergehenden Ansprüche, **dadurch gekennzeichnet, dass** die oder eine Antriebseinheit (17) drehwinkelbasiert gesteuert oder geregelt wird.

10. Laborzentrifuge (1) zum Zentrifugieren eines Produkts (6), wobei die Laborzentrifuge (1) einen Rotor (2) aufweist, der um eine horizontale Rotationsachse (3) rotiert und an dem das Produkt (6) beabstandet von der Rotationsachse (3) gehalten ist, **dadurch gekennzeichnet, dass** eine Antriebseinheit (117) vorhanden ist, welcher über eine Steuereinheit (48) zur Durchführung eines Verfahrens nach einem der Ansprüche 1 bis 9 ansteuerbar ist.

11. Laborzentrifuge (1) nach Anspruch 10, **dadurch gekennzeichnet, dass** der Rotor (2) eine Aufnahme (5) für das Produkt (6) ausbildet, wobei auf einer Seite des Rotors (2) eine Zuführöffnung (8) der Aufnahme (5) ausgebildet ist, über welche ein Produkt (6) der Aufnahme (5) zuführbar ist, und auf der anderen Seite des Rotors 2() eine Entnahmeöffnung (9) der Aufnahme (5) ausgebildet ist, über welche das Produkt (6) nach dem Zentrifugieren aus der Aufnahme (5) entnommen werden kann.

12. Laborzentrifuge (1) nach Anspruch 10 oder 11, **dadurch gekennzeichnet, dass** der Rotor (2) über eine Längsachse oder Antriebsachse (43) einer Antriebseinheit (17) angetrieben wird, welche parallel und beabstandet zu der Rotationsachse (3) des Rotors (2) angeordnet ist, wobei die Antriebseinheit (17) in Umfangsrichtung um die Rotationsachse (3) zu der Aufnahme (5) oder Halterung (4) für das Produkt (6) in einer Belade-Winkelstellung (27) und/oder Entlade-Winkelstellung versetzt angeordnet ist.

13. Laborzentrifuge (1) nach einem der Ansprüche 10 bis 12, **dadurch gekennzeichnet, dass** ein Sensor (46) zur Erfassung des Drehwinkels des Rotors (2) vorhanden ist und eine Steuereinheit (48) vorhanden ist, welche mit Steuerlogik ausgestattet ist, welche die oder eine Antriebseinheit (17) des Rotors (2) auf Grundlage des erfassten Drehwinkels des Rotors (2) steuert oder regelt.

14. Laborzentrifuge (1) nach einem der Ansprüche 10 bis 13, **dadurch gekennzeichnet, dass** die oder eine Antriebseinheit (17) eine Feld-orientierte Regelung aufweist.

**Claims**

1. Method for operating a laboratory centrifuge (1) for centrifugalising a product (6), the laboratory centrifuge (1) comprising a rotor (2) which rotates about a horizontal rotational axis (3) and at which the product (6) is held at a distance from the rotational axis (6),

   a) the rotor (2) being accelerated from a resting angular position (27) of the product (6) wherein the product (6) is arranged between a 3:00 o'clock position and a 9:00 o'clock position and the product has an angular velocity of zero in such a way that for the first arrival in a reversing angular position of the rotor (2) wherein the product (6) is arranged in a 12:00 o'clock position the rotor (2) has reached an angular velocity which is so great that the centrifugal acceleration acting upon the product (6) is higher than the gravitational acceleration, and/or
   b) the rotor (2) being decelerated from a reversing angular position of the product (6) wherein the product (6) is arranged in a 12:00 o'clock position and the product (6) comprises an angular velocity which is so great that the centrifugal acceleration acting upon the product (6) is higher than the gravitational acceleration to the first arrival at a resting angular velocity of the rotor (2) wherein the product (6) is arranged between a 3:00 o'clock position and a 9:00 o'clock position to an angular velocity of zero,

   **characterised in that**

   c) during the acceleration and/or deceleration of the product (6) a 6:00 o'clock position is passed and the acceleration from the resting angular position (27) to the first arrival at the reversing angular position and/or the deceleration from the reversing angular position to the first arrival at the resting angular positon is provided over an angular region between 180° and 270°,
d) the loading and unloading of the product (6) to the rotor (2) and from the rotor (2) is provided in a loading and unloading position which corresponds to the 6:00 o'clock position and

da) subsequent to a loading at first by the drive of the rotor (2) with a rotation in a first sense of the rotational direction is transferred into the resting angular position (27) from which then the acceleration is provided with an opposite second sense of the rotational direction towards the reversing angular position and/or
db) during the deceleration a rotation of the rotor (2) is provided with a first sense of the rotational direction up to the resting angular position with subsequent reversing rotation with an opposite second sense of the rotational direction from the resting angular position into the unloading position.

2. Method of claim 1, **characterised in that** in the reversing angular position the angular velocity is so great that the centrifugal acceleration acting upon the product (6) at least equals the double of the gravitational acceleration.

3. Method of one of claims 1 to 2, **characterised in that** the product (6) is automatically

a) fed to the rotor (2) and/or
b) removed from the rotor (2).

4. Method of claim 3, **characterised in that** the product (6) is automatically

a) fed to the rotor (2) and
b) removed from the rotor (2) after the centrifugation

with a movement with the same sense of direction.

5. Method of one of claims 1 to 4, **characterised in that** by a compensation device (10) an unbalanced mass of the rotor (2) depending on the mass of the product (6) is reduced or removed.

6. Method of one of the preceding claims, **characterised in that** the product (6) is fixed at the rotor (2) by a support (4).

7. Method of claim 6, **characterised in that** the support (4) comprises an accommodating body which forms an accommodation wherein the product (6) is arranged and which forms a coupling region by which the accommodating body with the product (6) arranged in the accommodation is mounted to the rotor (2).

8. Method of one of the preceding claims, **characterised in that** by a sensor (46) a rotational angle of the rotor (2) is sensed and the or a drive unit (17) of the rotor (2) is controlled on the basis of the sensed rotational angle.

9. Method of one of the preceding claims, **characterised in that** the or a drive unit (17) is controlled on the basis of a rotational angle.

10. Laboratory centrifuge (1) for the centrifugation of a product (6), the laboratory centrifuge (1) comprising a rotor (2) which is rotated about a horizontal rotational axis (3) and at which the product (6) is held at a distance from the rotational axis (3), **characterised in that** a drive unit (117) is provided which can be controlled by a control unit (48) for executing a method of one of the claims 1 to 9.

11. Laboratory centrifuge (1) of claim 10, **characterised in that** the rotor (2) forms an accommodation (5) for the product (6), on one side of the rotor (2) a feeding opening (8) of the accommodation (5) being formed by which it is possible to feed a product (6) to the accommodation (5) and on the other side of the rotor (2) a removal opening (9) of the accommodation (5) being formed by which it is possible to remove the product (6) after the centrifugation from the accommodation (5).

12. Laboratory centrifuge (1) of claim 10 or 11, **characterised in that** the rotor (2) is driven with a longitudinal axis or driving axis (43) of a drive unit (17) which is arranged parallel to the rotational axis (3) of the rotor (2) and distant thereof, the drive unit (17) being arranged with an offset in circumferential direction around the rotational axis (3) to the accommodation (5) or support (4) for the product (6) in a loading angular position (27) and/or unloading angular position.

13. Laboratory centrifuge (1) of one of claims 10 to 12, **characterised in that** a sensor (46) is provided for sensing the rotational angle of the rotor (2) and a control unit (48) is provided which comprises control logic which controls the or a drive unit (17) of the rotor (2) on the basis of the sensed rotational angle of the rotor (2).

14. Laboratory centrifuge (1) of one of claims 10 to 13, **characterised in that** the or a drive unit (17) comprises a field-oriented control.

# Revendications

**1.** Procédé de fonctionnement d'une centrifugeuse de laboratoire (1) destiné à la centrifugation d'un produit (6), la centrifugeuse de laboratoire (1) présentant un rotor (2) qui tourne autour d'un axe de rotation (3) horizontal et sur lequel le produit (6) est retenu à distance de l'axe de rotation (6), dans lequel

a) à partir d'une position angulaire de repos (27) du produit (6) dans laquelle le produit (6) est disposé entre une position 3h00 et une position 9h00 et possède une vitesse angulaire nulle, le rotor (2) est accéléré de telle sorte que, lors de l'obtention pour la première fois de la position angulaire inverse du rotor (2) dans laquelle le produit (6) est disposé dans une position 12h00 heures, le rotor (2) a atteint une vitesse angulaire qui est élevée au point que l'accélération centrifuge agissant sur le produit (6) est plus élevée que l'accélération due à la gravité, et/ou
b) à partir d'une position angulaire inverse du produit (6) dans laquelle le produit (6) est disposé dans une position 12h00 et possède une vitesse angulaire qui est élevée au point que l'accélération centrifuge agissant sur le produit (6) est plus élevée que l'accélération due à la gravité jusqu'à l'obtention pour la première fois d'une position angulaire de repos du rotor (2) dans laquelle le produit (6) est disposé entre une position 3h00 et une position 9h00 heures, le rotor (2) est freiné à une vitesse angulaire nulle,

**caractérisé en ce que**

c) pendant l'accélération et/ou le freinage, le produit (6) passe par une position 6h00, et l'accélération s'effectue à partir de la position angulaire de repos (27) jusqu'à l'obtention pour la première fois de la position angulaire inverse et/ou le freinage s'effectue à partir de la position angulaire inverse jusqu'à l'obtention pour la première fois de la position angulaire de repos sur une plage angulaire entre 180° et 270°,
d) dans lequel un chargement et déchargement du produit (6) vers et en provenance du rotor (2) s'effectuent dans une position de chargement et déchargement qui correspond à la position 6h00 et

da) à la suite d'un chargement, le rotor (2) est, d'abord au moyen de l'entraînement, transféré avec un premier sens directionnel de rotation dans la position angulaire de repos (27) à partir de laquelle l'accélération s'effectue ensuite avec un deuxième sens directionnel de rotation inverse en direction de la position angulaire inverse, et/ou

db) jusqu'à la position angulaire de repos pendant le freinage, une rotation du rotor (2) avec un premier sens directionnel de rotation s'effectue avec ensuite une rotation en arrière avec un deuxième sens directionnel de rotation opposé, à partir de la position angulaire de repos vers la position de déchargement.

**2.** Procédé selon la revendication 1, **caractérisé en ce que,** dans la position angulaire inverse, la vitesse angulaire est élevée au point que l'accélération centrifuge agissant sur le produit (6) correspond au moins au double de l'accélération due à la gravité.

**3.** Procédé selon l'une des revendications 1 à 2, **caractérisé en ce que** le produit (6) est automatiquement

a) acheminé au rotor (2) et/ou
b) enlevé du rotor (2).

**4.** Procédé selon la revendication 3, **caractérisé en ce que,** avec un mouvement avec le même sens directionnel de rotation, le produit (6) est automatiquement

a) acheminé au rotor (2) et
b) enlevé du rotor (2) après la centrifugation.

**5.** Procédé selon l'une des revendications 1 à 4, **caractérisé en ce que,** par le biais d'un système de compensation (10), un balourd du rotor (2) qui dépend de la masse du produit (6) est réduit ou supprimé.

**6.** Procédé selon l'une des revendications précédentes, **caractérisé en ce que** le produit (6) est fixé sur le rotor (2) par le biais d'un élément de retenue (4).

**7.** Procédé selon la revendication 6, **caractérisé en ce que** l'élément de retenue (4) est formé avec un corps de logement qui contient un logement dans lequel le produit (6) est disposé, et qui constitue une zone de couplage par le biais de laquelle le corps de logement avec le produit (6) disposé dans le logement est fixé sur le rotor (2).

**8.** Procédé selon l'une des revendications précédentes, **caractérisé en ce qu'**un angle de rotation du rotor (2) est détecté par le biais d'un capteur (46), et l'unité ou une unité d'entraînement (17) du rotor (2) est commandée ou régulée sur la base de l'angle de rotation détecté.

**9.** Procédé selon l'une des revendications précédentes, **caractérisé en ce que** l'unité ou une unité d'entraînement (17) est commandée ou régulée sur la

17

base de l'angle de rotation.

**10.** Centrifugeuse de laboratoire (1) destinée à la centrifugation d'un produit (6), la centrifugeuse de laboratoire (1) présentant un rotor (2) qui tourne autour d'un axe de rotation (3) horizontal et sur lequel le produit (6) est retenu à distance de l'axe de rotation (3), **caractérisée en ce qu'**il y a une unité d'entraînement (117) qui peut être pilotée par le biais d'une unité de commande (48) pour la réalisation d'un procédé selon l'une des revendications 1 à 9.

**11.** Centrifugeuse de laboratoire (1) selon la revendication 10, **caractérisée en ce que** le rotor (2) constitue un logement (5) pour le produit (6), une ouverture d'acheminement (8) du logement (5) étant constituée sur un côté du rotor (2), par le biais de laquelle un produit (6) peut être acheminé au logement (5), et une ouverture d'enlèvement (9) du logement (5) étant constituée sur l'autre côté du rotor (2), par le biais de laquelle le produit peut être enlevé du logement (5) après la centrifugation.

**12.** Centrifugeuse de laboratoire (1) selon la revendication 10 ou 11, **caractérisée en ce que** le rotor (2) est entraîné par le biais d'un axe longitudinal ou axe d'entraînement (43) d'une unité d'entraînement (17) qui est disposée parallèlement à l'axe de rotation (3) du rotor (2) et à distance de cet axe, l'unité d'entraînement (17) étant disposée dans la direction circonférentielle autour de l'axe de rotation (3) de façon décalée par rapport au logement (5) ou à l'élément de retenue (4) pour le produit (6) dans une position angulaire de chargement (27) et ou une position angulaire de déchargement.

**13.** Centrifugeuse de laboratoire (1) selon l'une des revendications 10 à 12, **caractérisée en ce qu'**il y a un capteur (46) pour la détection de l'angle de rotation du rotor (2), et **en ce qu'**il y a une unité de commande (48) qui est équipée d'une logique de commande qui commande ou régule l'unité ou une unité d'entraînement (17) du rotor (2) sur la base de l'angle de rotation détecté du rotor (2).

**14.** Centrifugeuse de laboratoire (1) selon l'une des revendications 10 à 13, **caractérisée en ce que** l'unité ou une unité d'entraînement (17) présente une régulation à orientation de champ.

1

**20**

g

12

**11**

10

**2**

13,14

9

7

8

4,5

**3**

**21**

**6**

z

y

x

**19**

**Fig. 1**

1

16b

10

g

2

3

11

16c

16a

17

6    4,5    15

z

x

y

**<u>Fig. 2</u>**

**Fig. 3**

**Fig. 4**

**Fig. 5**

**Fig. 6**

**Fig. 7**

**Fig. 8**

**Fig. 9**

**Fig. 10**

**Fig. 11**

58,59

21

60

61

61

63

z

y     x

62  66

**Fig. 12**

21   58,59

60

61

63

z

y   x

60  62  66

**Fig. 13**

21

62

63

67 73

70

68

72

69

71

2

z

y   x

**Fig. 14**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2821339 A
- US 20080182742 A1
- DE 102012201717 A1
- EP 2835178 A1
- US 20050026765 A1